# EUROPÄISCHE PATENTANMELDUNG

(11) **EP 3 686 645 A1**
(43) Veröffentlichungstag der Anmeldung: **29.07.2020**
(21) Anmeldenummer: 20153106.8
(22) Anmeldetag: 22.01.2020
(51) Int. Cl.: G02B 21/00, G02B 21/08

(54) **BELEUCHTUNGSEINRICHTUNG FÜR EIN ABBILDENDES OPTISCHES GERÄT SOWIE VERFAHREN ZUR DETEKTION**

(30) Priorität: 24.01.2019 DE 102019101743
(71) Anmelder: SCHOTT AG, 55122 Mainz (DE)
(72) Erfinder: STÜVEN, Dr. Theis, 65189 Wiesbaden (DE)
(74) Vertreter: Blumbach · Zinngrebe Patentanwälte PartG mbB

(57) **Zusammenfassung**

Die vorliegende Erfindung betrifft eine Beleuchtungseinrichtung für ein abbildendes optisches Gerät, vorzugsweise ein vergrößerndes optisches Gerät wie beispielsweise ein Mikroskop. Die Erfindung betrifft ferner ein Verfahren zur Detektion, beispielsweise von Partikeln, insbesondere metallischen Partikeln, etwa im Zusammenhang mit einer Analyse der Sauberkeit von Oberflächen bzw. einer Restschmutzanalyse oder Rissen.

Hierzu wird eine Beleuchtungseinrichtung zur Beleuchtung eines zu analysierenden Objektes in einem abbildenden optischen Gerät zur mikroskopischen Analyse bei zumindest zwei verschiedenen Kontrastverfahren vorgeschlagen, wobei für die Beleuchtung Lichtquellen vorgesehen sind, und wobei
die zu einem Kontrastverfahren gehörenden Lichtquellen unabhängig voneinander ansteuerbar sind.

## Beschreibung

Die vorliegende Erfindung betrifft eine Beleuchtungseinrichtung für ein abbildendes optisches Gerät, vorzugsweise ein vergrößerndes optisches Gerät wie beispielsweise ein Mikroskop. Die Erfindung betrifft ferner ein Verfahren zur Detektion, beispielsweise von Partikeln, insbesondere metallischen Partikeln, etwa im Zusammenhang mit einer Analyse der Sauberkeit von Oberflächen bzw. einer Restschmutzanalyse oder Rissen.

Die Anforderungen an die Qualitätssicherung von Bauteilen oder Komponenten und damit einhergehend die Anforderungen an die Sauberkeit dieser Bauteile sind in vielen technischen Bereichen in den letzten Jahren stetig gestiegen. Das sog. "Clean Manufacturing" stellt beispielsweise ein zentrales Thema im Bereich der Herstellung von Fahrzeugen oder höherwertigen Anlagen und Geräte, beispielsweise im chemischen oder medizinischen Bereich, dar. Zugrunde liegt die Erkenntnis, dass die Funktionalität und die Lebensdauer vieler Bauteile in einem direkten Zusammenhang mit einer partikulären Kontamination, also einer Verunreinigung beispielsweise mit Fremdpartikeln, stehen. Derartige Verunreinigungen können an vielen Stellen im Produktionsprozess auftreten.

Eine frühzeitige und vollständige Erkennung einer Kontamination, sowohl qualitativ wie auch quantitativ, kann einen hohen Beitrag dazu leisten, die zugehörigen Produktionsprozesse zu verbessern und die Qualität der Erzeugnisse sicherzustellen oder sogar zu steigern.

So besteht die Notwendigkeit, partikuläre Rückstände zu identifizieren und insbesondere in Bezug auf sauberkeitskritische Verunreinigungen zu analysieren. Hierzu sind geeignete Messverfahren und -vorrichtungen erforderlich.

In der Automobilindustrie beispielsweise sind in den einschlägigen Vorschriften VDA-Band 19 und ISO 16232 Verfahren und Geräte aufgeführt, welche zur Sicherstellung der Qualität der Erzeugnisse beitragen sollen. Hiernach sind zur Bestimmung der Sauberkeit neben der Größe und der Anzahl der Partikel auch deren mechanische oder elektrische Werkstoffeigenschaften von Bedeutung.

Vor diesem Hintergrund ist die Bestimmung des Partikelmaterials ein wichtiges Kriterium zur Beschreibung der Sauberkeit eines Bauteils. Zur Bestimmung der Sauberkeit eines Bauteiles kann nach einem anerkannten Verfahren dieses mit einer Spülflüssigkeit gewaschen werden. Nach dem Waschen kann die Spülflüssigkeit entnommen und vorzugsweise vollständig über ein Filter geleitet werden, so dass der Filter von der Spülflüssigkeit durchströmt wird und vorhandene Partikel dann auf der Filteroberfläche verbleiben. Nachfolgend kann dieser Filter dann mit mikroskopischen Verfahren im Rahmen einer Partikelanalyse analysiert werden. Hierzu geeignete Verfahren stellen die optischen Kontrastverfahren der Lichtmikroskopie dar.

Ein Verfahren zur Partikelanalyse beschreibt das Dokument DE 10 2005 062 439 A1. Hiernach wird ein Teil einer Partikelansammlung auf einem planaren Substrat beleuchtet und abgebildet, wobei eine Messfläche der Partikelansammlung rasterweise verlagert wird und an der Messfläche erhaltene Abbildungsdaten hinsichtlich der Partikeleigenschaften ausgewertet werden. Um metallische Partikel identifizieren zu können, wird vorgeschlagen, neben einem festen Analysator einen drehbaren Polarisator zu verwenden, welcher über einen Stellmotor zwischen zwei verschiedenen Stellungen hin- und hergedreht werden kann. Demzufolge können zwei Abbildungen erzeugt werden: Einmal im Hellfeld bei paralleler Ausrichtung von Analysator und Polarisator und einmal in der Polarisation, wenn Analysator und Polarisator gekreuzt zueinander sind.

Ein motorisch gedrehter Polarisator benötigt allerdings für die Drehung eine gewisse Zeit, so dass sich die Zeit für die Durchführung einer Analyse, insbesondere bei einer vollständigen Analyse mit einer Vielzahl zu analysierenden Messflächen, um einen nicht unerheblichen Anteil verlängert. Eine mechanische Drehung des Polarisators ist auch weniger reproduzierbar sowie verschleißanfällig, da bewegte Teile vorhanden sind. Zudem entstehen in der Praxis leichte Vibrationen am Mikroskop, die zu einem "Verwackeln" führen und die Bildaufnahmequalität reduzieren können. Hinzu kommt, dass es bei einer nicht ganz parallelen Ausrichtung von Analysator und Polarisator bereits im Hellfeld schon zu einer teilweisen Polarisation des Lichts kommt.

Ein weiteres Verfahren zur Partikelanalyse beschreibt das Dokument DE 20 2009 014 694 U1. In diesem Dokument wird vorgeschlagen, eine Filtermembran mittels eines Mikroskops unter Verwendung eines Ringlichts zu analysieren, wobei das Ringlicht über einen äußeren und einen inneren LED-Ring verfügt. Von der Filtermembran werden ebenfalls zwei Abbildungen mit unterschiedlicher Polarisation erzeugt. Hierzu wird einmal der äußere und einmal der innere LED-Ring geschaltet.

Dieses Prinzip setzt zwingend die Verwendung von Ringlichtern mit zwei konzentrischen Ringen voraus. Dieses schließt sehr schmale Bauweisen aus, wie sie z.B. bei sogenannten "Slim" Ringlichtern erforderlich sind, die unter anderem bei einer Verwendung von mehreren Objektiven an einem Mikroskop zum Einsatz kommen. Ein weiterer Nachteil ist darin zu sehen, dass - bauartbedingt - die Beleuchtung des Objektes einmal über den äußeren LED-Ring und einmal über den inneren LED-Ring erfolgt. Da beide Ringe konzentrisch um einen Mittelpunkt angeordnet sind, bedingt diese Art der Beleuchtung zum Erhalt der zwei Abbildungen, dass das zu analysierende Objekt mit unterschiedlichen Neigungswinkeln beleuchtet wird, da der Abstand der Lichtquellen zum Mittelpunkt unterschiedlich ist. Dies ist insofern ungünstig, da sich beispielsweise der Schattenwurf eines erhabenen Objektes bei einer punktförmigen Beleuchtung unter verschiedenen Winkeln ändert, was sehr rasch zu Messunsicherheiten und - ungenauigkeiten führen kann. Auch kann sich die Helligkeit des angeleuchteten Objektes bei einer Beleuchtung aus unterschiedlichen Winkeln ändern.

Wünschenswert wäre daher ein Verfahren zur optischen Analyse eines Objektes mit einem abbildenden optischen Gerät, vorzugsweise mittels Kontrastverfahren, welches die vorstehend genannten Nachteile vermeidet.

Dabei soll das Verfahren einen Wechsel des Kontrastverfahrens erlauben, etwa, um in einer Partikelansammlung metallische Partikel detektieren zu können, ohne aber eine mechanische Bewegung von Bauteilen des optischen Gerätes zum Wechseln des Kontrastverfahrens zu erfordern.

Der Wechsel des Kontrastverfahrens soll zudem möglichst rasch und vibrationsfrei erfolgen, so dass auch eine abschnittsweise Analyse größerer Flächen zeitnah möglich ist.

Ferner soll gemäß einer Ausführungsform der Erfindung, gerade bei einem Wechsel des Kontrastverfahrens, die Beleuchtung, insbesondere die Richtung, aus der das zu analysierende Objekt angestrahlt wird, homogen sein, so dass Schattenwurf und Helligkeit des Objektes sich bei einem Wechsel des Kontrastverfahrens nicht ändern.

Schließlich sollen auf einfache und kostengünstige Weise auch verschiedene Kontrastverfahren verwendet und miteinander kombiniert werden können, beispielsweise mit einer Beleuchtung im Hellfeld, Dunkelfeld, mit oder ohne Polarisation, oder auch mittels Fluoreszenz.

Dieser Aufgabe haben sich die Erfinder angenommen.

Überraschend einfach wird diese Aufgabe durch eine Beleuchtungseinrichtung, ein abbildendes optisches Gerät sowie ein Verfahren zur Beleuchtung eines Objektes und ein Verfahren zur optischen Analyse eines Objektes nach einem der unabhängigen Ansprüche gelöst.

Bevorzugte Ausführungsformen und Weiterbildungen der Erfindung sind den jeweiligen Unteransprüchen zu entnehmen.

Gegenstand der Erfindung ist demnach in einem ersten Aspekt eine Beleuchtungseinrichtung zur Beleuchtung eines zu analysierenden Objektes, vorzugsweise zur Beleuchtung eines Objektes in einem abbildenden optischen Gerät. Das abbildende optische Gerät ist vorzugsweise ein vergrößerndes abbildendes optisches Gerät zur mikroskopischen Analyse, beispielsweise ein Mikroskop oder ein Stereo-Mikroskop, wobei im Betrieb der Beleuchtungseinrichtung erfindungsgemäß zumindest zwei unterschiedlichen Kontrastverfahren zum Einsatz kommen.

Derartige lichtmikroskopische Kontrastverfahren umfassen verschiedene Beleuchtungsmethoden, die eine unterschiedliche Darstellung des Objektes ermöglichen, nachfolgend auch als Probe bezeichnet. Als solche zählen beispielsweise die folgenden Beleuchtungsmethoden:
- Hellfeld,
- Dunkelfeld,
- Polarisation,
- Schrägbeleuchtung,
- Differentieller Interferenzkontrast oder
- Fluoreszenz.

Die erfindungsgemäße Beleuchtungseinrichtung ermöglicht damit eine Beleuchtung mit zumindest zwei unterschiedlichen Beleuchtungsmethoden und damit eine mikroskopische Analyse bei zumindest zwei unterschiedlichen Kontrastverfahren.

Die Beleuchtungseinrichtung umfasst dabei eine Beleuchtungsanordnung mit einer Gesamtheit von zumindest zwei Lichtquellen, welche im Betriebszustand elektromagnetische Strahlung zumindest einer Wellenlänge und/oder eines Wellenlängenbereiches und/oder eines Wellenlängenspektrums in Richtung auf das Objekt abstrahlen können,
wobei die Gesamtheit der Lichtquellen in Segmente umfassend zumindest jeweils eine Lichtquelle eingeteilt ist,
die Anzahl der Segmente zumindest der Anzahl an darzustellenden Kontrastverfahren entspricht, wobei die Lichtquellen der Segmente in zumindest eine erste und eine zweite Schalteinheit zusammengefasst werden, welche unabhängig voneinander vorzugsweise elektronisch ansteuerbar sind, und wobei jeweils die Lichtquellen einer Schalteinheit jeweils einem Kontrastverfahren zugeordnet sind. Die Kontrastverfahren können somit im Betrieb wechselseitig und/oder zumindest teilweise gleichzeitig sowie unabhängig voneinander angewendet werden.

Ein Wellenlängenspektrum meint im Sinne der Erfindung eine Gesamtheit elektromagnetischer Wellen und kann damit elektromagnetische Strahlung einer oder verschiedener Wellenlängen und/oder einen oder mehrere Wellenlängenbereiche umfassen, beispielsweise elektromagnetische Strahlung einer bestimmten Wellenlänge und elektromagnetische Strahlung in einem Wellenlängenbereich.

Dabei kann die Gesamtheit der Lichtquellen der Beleuchtungsanordnung in Segmente umfassend zumindest jeweils eine Lichtquelle eingeteilt sein, wobei deren Anzahl zumindest der Anzahl an darzustellenden Kontrastverfahren oder ein Vielfaches hiervon beträgt. Im Fall von zwei unterschiedlichen Kontrastverfahren kann die Anzahl der Segmente dann zumindest zwei oder mehr betragen, beispielsweise drei oder besonders bevorzugt vier oder sechs oder acht Segmente. Eine Schalteinheit umfasst demnach zumindest ein Segment. Eine größere Anzahl von Segmenten pro Schalteinheit, etwa zwei oder drei Segmente, oder bevorzugt vier oder mehr Segmente, ermöglicht eine homogenere Beleuchtung des Objektes bei einem Wechsel von einem Kontrastverfahren zu einem anderen.

In einer günstigen Ausführungsform umfasst jedes darstellbare Kontrastverfahren und damit jede Schalteinheit eine gleiche Anzahl an Segmenten. Auf diese Weise kann eine nachfolgend auch als segmentierte Beleuchtung bezeichnete Beleuchtung eines Objektes realisiert werden. Im Fall von beispielsweise zwei darstellbaren Kontrastverfahren können acht Segmente gebildet werden, wobei dann jede Schalteinheit z.B. vier Segmente umfassen kann. Im Fall von beispielsweise drei darstellbaren Kontrastverfahren können z.B. neun oder 12 Segmente gebildet werden, wobei dann jede Schalteinheit entsprechend drei oder vier Segmente umfassen kann.

Die zumindest eine Lichtquelle jedes Segmentes kann gleichmäßig zu zumindest einer ersten und einer zweiten Schalteinheit zusammengefasst werden, wobei die der Schalteinheit zugeordneten Lichtquellen vorzugsweise unabhängig voneinander vorzugsweise elektronisch ansteuerbar sind. Dies bedeutet, dass die elektrische Kontaktierung der Lichtquellen vorzugsweise derart ausgebildet ist, dass die zu einer ersten Schalteinheit gehörenden Lichtquellen unabhängig von denjenigen zu einer zweiten Schalteinheit oder auch beispielsweise einer dritten Schalteinheit gehörenden Lichtquellen ein- und ausgeschaltet oder in ihrer Lichtstärke oder in einem anderen Parameter unabhängig voneinander verändert werden können. Auf diese Weise ist es besonders einfach möglich, verschiedene Kontrastverfahren zur mikroskopischen Analyse mit der erfindungsgemäßen Beleuchtungseinrichtung zu realisieren und auf elektronischem Wege diese einzeln anzusteuern.

Die Zuordnung der Segmente zu den Schalteinheiten erfolgt vorzugsweise dergestalt, dass nicht nebeneinanderliegende Segmente zusammengefasst werden. Bei einer Anordnung der Lichtquellen in einer Reihe beispielsweise kann eine Segmentierung in sechs Segmente erfolgen, wobei das erste, das dritte und das fünfte Segment zu einer ersten Schalteinheit, und das zweite, das vierte und das sechste Segment zu einer zweiten Schalteinheit zusammengefasst sein können. Eine Schalteinheit umfasst demnach vorzugsweise wenigstens zwei nicht aneinander angrenzende Segmente.

Erfindungsgemäß ist die Anzahl der Lichtquellen, die ein jedes Segment umfasst, und/oder der gemittelte Neigungswinkel, unter dem das Licht der Lichtquellen eines Segmentes auf das Objekt auftrifft, vorzugsweise gleich. Demnach sind bevorzugt auch die Anzahl der Lichtquellen, die zu einer Schalteinheit gehören, und/oder der gemittelte Neigungswinkel, unter dem das Licht der Lichtquellen der Segmente einer Schalteinheit auf das Objekt auftreffen, gleich, wobei dieses aber keine zwingende Anforderung ist.

In einer besonders bevorzugten Ausführungsform ist daher auch der Abstand der zumindest einen Lichtquelle eines jeden Segments der Beleuchtungseinrichtung zu einem Mittelpunkt der Beleuchtungseinrichtung gleich. Als Bezugspunkt der Lichtquelle kann hierbei der Mittelpunkt der lichtabstrahlenden Fläche der Lichtquelle angenommen werden. Im Falle mehrerer Lichtquellen pro Segment kann vereinfachend der gemittelte Abstand, der sich aus den einzelnen Abständen der Lichtquellen eines Segments zu dem Mittelpunkt der Beleuchtungseinrichtung ergibt, herangezogen werden. Dies bedeutet, dass die Anordnung der zumindest einen Lichtquelle innerhalb eines jeden Segments vorzugsweise gleich ist.

Der gemittelte Neigungswinkel meint damit im Falle mehrerer Lichtquellen eines Segments denjenigen Neigungswinkel, welcher sich bei einer Mittelung der jeweiligen Neigungswinkel sämtlicher Lichtquellen des Segments ergibt. Ein unterschiedlicher Neigungswinkel ergibt sich beispielsweise durch einen unterschiedlichen Abstand der Lichtquellen von dem Mittelpunkt der Beleuchtungsanordnung, wenn die Lichtquellen in ihrer Abstrahlrichtung auf einen gemeinsamen Punkt hin ausgerichtet sind, etwa auf ein zu analysierendes Objekt auf einem Objektträger. Die Abstrahlrichtung meint hierbei diejenige Richtung, in welcher die Intensität des abgestrahlten Lichtes am höchsten ist. Der Neigungswinkel einer einzelnen Lichtquelle kann dann zwischen der Abstrahlrichtung des von der Lichtquelle abgestrahlten Lichtes und der Oberflächennormalen des Objektträgers bestimmt werden.

Erfindungsgemäß können die Kontrastverfahren im Betrieb der Beleuchtungseinrichtung unabhängig, beispielsweise wechselseitig, geschaltet werden. Dies bedeutet in anderen Worten, dass die Beleuchtungseinrichtung es ermöglicht, zwischen zumindest zwei verschiedenen Beleuchtungsmethoden zur Beleuchtung des Objektes zur mikroskopischen Analyse in dem abbildenden optischen Gerät wechseln zu können und/oder zumindest eine Beleuchtungsmethode zu zumindest der einen anderen Beleuchtungsmethode gegebenenfalls wechselseitig zuzuschalten.

In einer besonders bevorzugten Ausführungsform umfassen die Kontrastverfahren die Beleuchtung im Hellfeld und die Beleuchtung mit Polarisation. In einer weiteren besonders bevorzugten Ausführungsform umfassen die Kontrastverfahren die Beleuchtung im Hellfeld und die Beleuchtung mit Fluoreszenz. In einer nochmals weiteren besonders bevorzugten Ausführungsform umfassen die Kontrastverfahren die Beleuchtung im Hellfeld, die Beleuchtung mit Fluoreszenz und die Beleuchtung mit Polarisation.

Die erfindungsgemäße Segmentierung der Beleuchtung ist besonders gut geeignet, um im Betrieb als Kontrastverfahren auch eine Beleuchtung mit Polarisation zu ermöglichen. Hierzu kann von Vorteil ein Polarisationselement vorgesehen sein, welches dabei vorzugsweise derart ausgebildet ist, dass Licht der Lichtquellen der einen Schalteinheit vor Auftreffen auf das Objekt das Polarisationselement durchdringt und das Licht der Lichtquellen der andere Schalteinheit direkt auf das Objekt gerichtet ist, ohne dass das Polarisationselement durchdrungen wird. Das Licht der Lichtquellen der ersten Schalteinheit wird demnach im Betrieb polarisiert und stellt damit ein polarisiertes Licht zur Beleuchtung des Objektes zur Verfügung. Das Polarisationselement kann hierzu von Vorteil einen Polarisationsfilter umfassen, welcher das Licht der Lichtquellen linear polarisiert. Das Licht der Lichtquellen der zweiten Schalteinheit wird demnach nicht polarisiert.

In einer anderen Ausführungsform ist vorgesehen, anstelle oder in Ergänzung des Polarisationselements Lichtquellen zu verwenden, welche in der Lage sind, polarisiertes Licht abzugeben, und/oder welche polarisiert betreibbar sind. Dieses können etwa spezielle LEDs sein sowie Laser bzw. Laserdioden, die an sich oder in Abhängigkeit von den Betriebsparametern polarisiertes Licht emittieren können. Selbstverständlich sind auch Lösungen mit von der Erfindung umfasst, bei denen ein Polarisationselement und Lichtquellen, welche polarisiertes Licht abgeben können, miteinander kombiniert werden.

Auf diese Weise kann überraschend einfach eine Beleuchtung eines zu analysierenden Objektes, vorzugsweise eine Beleuchtung eines Objektes in einem abbildenden optischen Gerät zur mikroskopischen Analyse, ermöglicht werden, bei welcher im Betrieb unabhängig voneinander zumindest zwei unterschiedliche Beleuchtungsmethoden eingesetzt werden können, und wobei eine der zumindest zwei unterschiedlichen Beleuchtungsmethoden eine Beleuchtung mit polarisierter elektromagnetischer Strahlung, also eine Beleuchtung mit Polarisation, umfassen kann. Die unterschiedlichen Beleuchtungsmethoden entsprechend dabei jeweils einem Kontrastverfahren.

Eine erste Beleuchtungsmethode kann dann derjenigen Beleuchtung entsprechen, welche bei Betrieb der Lichtquellen der ersten Schalteinheit vorherrscht, und ein zweiter Beleuchtungszustand demjenigen, welcher einem Betrieb der Lichtquellen der zweiten Schalteinheit entspricht. Ebenso können Lichtquellen von Segmenten zu beispielsweise drei Schalteinheit zusammengefasst werden, um auch drei verschiedene Kontrastverfahren darstellen zu können. Ein unabhängiger, beispielsweise wechselseitiger Betrieb meint in diesem Sinne, dass beispielsweise die zu der einen Schalteinheit gehörenden Lichtquellen oder die zu der anderen Schalteinheit gehörenden Lichtquellen eingeschaltet sind.

Ein einfaches Umschalten zwischen zumindest zwei verschiedenen Kontrastoptionen ist oftmals für die Beurteilung von Materialeigenschaften des durch ein abbildendes optisches Gerät, etwa ein Mikroskop, beobachteten Objektes sehr hilfreich oder sogar notwendig. Damit können mit der erfindungsgemäßen Beleuchtungseinrichtung höchst vorteilhaft zumindest zwei verschiedene Kontrastverfahren in einem einzigen abbildenden optischen Gerät dargestellt werden, wobei die Lichtquellen der zugeordneten Schalteinheiten dann entsprechend betrieben werden können.

Der Betrieb kann sehr vorteilhaft durch das einzelne Ansteuern der zu einer Schalteinheit bzw. den Segmenten gehörenden Lichtquellen erfolgen, beispielsweise über eine Rechnereinheit, welche wechselseitig die Schaltung und die Versorgung mit Strom der jeweiligen Lichtquellen übernimmt. Die Rechnereinheit kann Bestandteil der Beleuchtungseinrichtung sein, oder aber auch in das abbildende optische Gerät integriert sein. Es ist selbstverständlich auch möglich, alternativ oder in Ergänzung eine externe Benutzerschnittstelle vorzusehen, so dass ein Bediener des optischen Gerätes die Steuerung der Schalteinheiten auch manuell übernehmen kann.

Die erfindungsgemäße Beleuchtungseinrichtung ist damit besonders gut geeignet, mit einem abbildenden optischen Gerät zur mikroskopischen Analyse betrieben zu werden.

Auf diese Weise ist es überraschend einfach und sicher möglich, beispielsweise metallische Partikel in einer Partikelansammlung zu detektieren. Metallische Partikel können in einer Partikelansammlung mittels einer mikroskopischen Analyse detektiert werden, wobei, um die metallischen Partikel von anderen Partikeln unterscheiden zu können, zwei unterschiedlichen Kontrastverfahren für jeweils einen gleichen Bildausschnitt verwendet werden. Die erfindungsgemäße Beleuchtungseinrichtung ist hierzu besonders gut geeignet, um als Kontrastverfahren eine Hellfeldbeleuchtung und eine Beleuchtung mit Polarisation zu kombinieren.

Zur Analyse derartiger Partikel kann dabei eine Beleuchtung mit Polarisation beitragen. Hierbei wird beispielsweise das durch das Polarisationselement oder den Polarisator linear polarisierte Licht vom Partikel reflektiert, aber in dessen Schwingungsrichtung nicht verändert. Die Schwingungsrichtung des zuvor reflektierten polarisierten Lichtes ist dadurch so orientiert, dass es vom Analysator, der gegenüber dem Polarisator um bis zu 90° gedreht ist, zumindest teilweise blockiert bzw. herausgefiltert wird und der Partikel somit beispielsweise dunkel erscheint, was eine entsprechende Detektion seiner Dimensionen und Lage beispielsweise mittels Bildanalysesoftware ermöglicht.

Bei Beleuchtung des Objektes im Hellfeld, d.h. einer Beleuchtung mit nicht-polarisiertem Licht, werden metallische Partikel beispielsweise durch deren dann hell erscheinenden Oberflächenreflexionen erkennbar. In beiden Fällen erfolgt die Beleuchtung dabei vorzugsweise im Auflichtbetrieb, d.h. das Objekt wird aus der gleichen Richtung beleuchtet, aus der auch die Beobachtung erfolgt.

Somit können Form, Geometrie und Lage sowie die Art eines Partikels anhand zumindest zweier, unterschiedlicher Darstellungen ermittelt werden.

Die Beleuchtung des Objektes unterscheidet sich in dieser Ausführungsform also darin, dass das Licht vor Auftreffen auf das Objekt in Abhängigkeit von dem geschalteten Kontrastverfahren entweder durch ein Polarisationselement geführt oder auf andere Art polarisiert wird oder nicht. Werden nun zwei Bilder des Objektes miteinander verglichen, wobei das erste Bild bei einer Beleuchtung ohne Polarisation und das zweite Bild bei einer Beleuchtung mit Polarisation erzeugt wurde, so unterscheiden sich diese zwei Bilder in ihrer Polarisationseinstellung. Dadurch erscheinen auf dem zweiten Bild die Objekte bzw. deren Fläche beispielsweise schwarz, wohingegen bei dem ersten Bild metallische Partikel eine glänzende Oberfläche und damit verbunden Reflektionen zeigen, insbesondere hell erscheinen und damit unterscheidbar vom zweiten Bild sind, wodurch sie von anderen, nicht-metallischen Partikeln unterscheidbar werden. Es ist ersichtlich, dass dieses Prinzip auf jegliche Partikel übertragen werden kann, die aufgrund deren Beschaffenheit unterschiedliche, vom Untergrund, also beispielsweise dem Substrat, auf welchem diese liegen, unterscheidbare, Bilder unter polarisiertem bzw. unpolarisiertem Licht oder einer anderen Kombination von Kontrastverfahren bereitstellen.

Die Betrachtung der Bilder des zu analysierenden Objektes in dem abbildenden optischen Gerät kann entweder über die Okulare durch die Augen eines Bedieners oder über eine Digital- oder Videokamera erfolgen, welche die Bilder aufnimmt. Hierzu kann eine Rechnereinheit vorgesehen sein, welche die aufgenommenen Bilder speichern kann.

Selbstverständlich können ergänzend auch eine Bildanalysesoftware oder sonstige rechnerunterstützte Analyseverfahren zum Einsatz kommen, welche beispielsweise entsprechende Differenzverfahren zur Bildanalyse umfassen können und damit auch eine automatische Detektion metallischer Partikel erlauben. Die Unterscheidung metallischer Partikel von nicht-metallischen Partikeln kann damit anhand des Reflexionsverhaltens erfolgen. Hiermit ist neben der quantitativen Analyse auch eine qualitative Analyse der Materialeigenschaften gegeben. Die entsprechende Software kann beispielsweise in die Rechnereinheit integriert sein.

Die Erfindung stellt damit eine Beleuchtungseinrichtung zur Beleuchtung eines zu analysierenden Objektes, vorzugsweise zur Verwendung in einem abbildenden optischen Gerät zur optischen, insbesondere (licht-)mikroskopischen Analyse zur Verfügung, welche es ermöglicht, besonders einfach und rasch ohne mechanische Vorgänge zwischen zumindest zwei Kontrastverfahren wechseln zu können. Dies dient der Erzeugung von zumindest zwei verschiedenen Bildern des Objektes bei unterschiedlicher Beleuchtung.

In dem oben genannten Beispiel unterscheidet sich die Beleuchtung bei der Analyse der in diesem Fall zwei verschiedenen Kontrastverfahren in der Polarisation, welche durch das Umschalten von einem Kontrastverfahren in das andere geändert bzw. ein- und ausgeschaltet wird. Selbstverständlich ist es auch möglich, eine Änderung der Beleuchtung bei der Analyse durch die ausgewählten Kontrastverfahren mittels einer Änderung der Wellenlänge der elektromagnetischen Strahlung der Lichtquellen herbeizuführen. Dies gelingt überraschend einfach, wenn die Wellenlänge, der Wellenlängenbereich oder das Wellenlängenspektrum der elektromagnetischen Strahlung der Lichtquellen in Abhängigkeit von den jeweiligen Segmenten bzw. Schalteinheiten ausgewählt werden. Soll zum Beispiel ein Kontrastverfahren eine Hellfeld-Beleuchtung umfassen, so können die dieser Schalteinheit zugeordneten Lichtquellen von Vorteil elektromagnetische Strahlung im sichtbaren Wellenlängenbereich emittieren.

Soll ferner ein Kontrastverfahren eine Beleuchtung unter Fluoreszenz umfassen, so können die dieser Schalteinheit zugeordneten Lichtquellen von Vorteil elektromagnetische Strahlung im z.B. UV-Wellenlängenbereich emittieren.
In einer bevorzugten Ausführungsform der Erfindung umfasst ein Kontrastverfahren demnach zumindest eine Beleuchtung unter Fluoreszenz, vorzugsweise als UV-Hellfeldbeleuchtung. Diese kann in unterschiedlicher Weise mit zumindest einem weiteren Kontrastverfahren kombiniert werden, beispielsweise mit einer normalen Hellfeld-Beleuchtung und/oder mit einer Beleuchtung mit Polarisation.

Erfindungsgemäß ist auch bei einer derartigen Ausbildung der Beleuchtungseinrichtung mit einem UV-Kontrastverfahren die Anzahl der Lichtquellen, die ein jedes Segment und damit die jeweilige Schalteinheit umfasst, und/oder der gemittelte Neigungswinkel, unter dem das Licht der Lichtquellen eines Segmentes auf das Objekt auftrifft, vorzugsweise gleich. Auf diese Weise kann besonders vorteilhaft eine Probe sowohl unter Beleuchtung mit Fluoreszenz und zumindest einem weiteren Kontrastverfahren analysiert werden, wobei eine konstante, vergleichbare Beleuchtung mit vorzugsweise gleichen gemittelten Neigungswinkeln ermöglicht werden kann.

In besonders einfacher Weise können hierzu die Lichtquellen derjenigen Schalteinheit, welche dem Kontrastverfahren mit Fluoreszenz zugeordnet sind, als UV-Lichtquellen ausgebildet sein, also eingerichtet sein, um elektromagnetische Strahlung im UV-Wellenlängenbereich zu emittieren. Damit ist die erfindungsgemäße Beleuchtungseinrichtung auch geeignet zur Verwendung in oder mit Verfahren der Fluoreszenzmikroskopie. Als UV-Lichtquellen können hier beispielsweise LEDs eingesetzt werden, die elektromagnetische Strahlung im UV-Wellenlängenbereich emittieren.

Problematisch bei UV-Kontrastverfahren kann zum einen die Gefahr für das menschliche Auge sein, da diese Form der elektromagnetischen Strahlung für das menschliche Auge nicht sichtbar ist, aber zu irreparablen Schäden führen kann. Zum anderen kann es bei einer Beleuchtung mittels UV-Lichtquellen zu fehlerhafter Darstellung des aufgenommenen Bildes kommen, wenn beispielsweise eine Digital- oder Videokamera eingesetzt wird, um Bilder von dem Objekt aufzunehmen. Dies trifft beispielsweise auf Kameras zu, welche bereits im ultravioletten Wellenlängenspektrum, beispielsweise ab ca. 380 nm Wellenlänge, sensitiv sind. Bei solchen Kameras kann es beispielsweise bei einem Kontrastverfahren mit Fluoreszenz zu einer unerwünschten oder verfälschenden Addition des UV-Anregungssignals und des zu ermittelnden Fluoreszenzsignals, beispielsweise im sichtbaren Bereich liegend, kommen, was zu Unschärfe und im Falle von Farbkameras zu Fehlfarben führen kann.

Erfindungsgemäß ist daher vorgesehen, die Beleuchtungseinrichtung zur Beleuchtung eines zu analysierenden Objektes und/oder das abbildende optische Gerät zur optischen, insbesondere (licht-)mikroskopischen Analyse, beispielsweise ein Stereomikroskop, mit einem entsprechenden Sperrfilter, insbesondere mit einem UV-Sperrfilter, auszubilden. Der Sperrfilter, insbesondere der UV-Sperrfilter, kann unerwünschte elektromagnetische Strahlung, insbesondere im ultravioletten Wellenlängenspektrum, sperren.

Als Lichtquellen für das ultraviolette Anregungslicht können im Sinne der Erfindung besonders vorteilhaft UV-Lichtquellen mit einer schmalbandigen Abstrahlcharakteristik ausgewählt werden. Als schmalbandig wird dabei ein Bereich von 50 nm oder weniger, bevorzugt von 30 nm oder weniger und besonders bevorzugt von 10 nm oder weniger angesehen. Eine derartige Ausführungsform der Erfindung ermöglicht es, dass auf den Anregungsfilter verzichtet werden kann, was den UV-Sperrfilter und damit die erfindungsgemäße Beleuchtungseinrichtung kostengünstiger macht.

Die Kontrastverfahren der erfindungsgemäßen Beleuchtungseinrichtung können sich demnach unterscheiden in der Wellenlänge, in dem Wellenlängenbereich oder in dem Wellenlängenspektrum der elektromagnetischen Strahlung, mit der das Objekt bestrahlt wird, und/oder in der Polarisation.

Das Umschalten zwischen den Kontrastverfahren erfolgt dabei vorzugsweise elektronisch, was es ermöglicht, rasch in sehr kurzen Zeitabständen zwischen den Kontrastverfahren hin- und herschalten zu können.
Rasch bedeutet in diesem Zusammenhang, dass die Zeit für das Umschalten der Beleuchtungseinrichtung von einem Kontrastverfahren zu einem anderen weniger als 500 Millisekunden, bevorzugt weniger als 300 Millisekunden und ganz besonders bevorzugt weniger als 100 Millisekunden beträgt. Sämtliche Lichtquellen einer Schalteinheit werden damit innerhalb dieser Zeit parallel zueinander geschaltet, und die Lichtquellen verschiedener Schalteinheiten unabhängig zueinander. Mechanische Bewegungselemente, etwa Stellmotoren oder Verschiebeeinrichtungen, mit denen zwischen den beiden Polarisationseinstellungen gewechselt werden kann, sind erfindungsgemäß nicht erforderlich. Dies bietet verschiedene Vorteile.

Zum einen kann die Verstellung wartungsfrei betrieben werden, da keine beweglichen Teile vorhanden sind. Zum anderen kann der Wechsel zwischen den beiden Kontrastverfahren allein durch einen einfachen Schaltvorgang der Rechnereinheit oder ein elektrisches Signal erfolgen, so dass das Umschalten quasi ohne Zeitverlust erfolgen kann und lediglich ein synchronisiertes, wechselseitiges Ein- oder Ausschalten der Lichtquellen einer Schalteinheit umfasst. Damit ist es möglich, auch eine Vielzahl von Bildern oder Bildausschnitten wechselseitig in kürzester Zeit zu analysieren.

Durch die Segmentierung der Gesamtheit der Lichtquellen der Beleuchtungsanordnung in Segmente bzw. Schalteinheiten, welche jeweils vorzugsweise eine gleiche Anzahl an Lichtquellen umfassen, und deren Ansteuerung über Controller oder Software, ist es zudem möglich, das Objekt gleichbleibend hell und unter gleichen Winkeln zu beleuchten, wenn über den Controller oder durch die Software auch die Intensitäten der Lichtquellen angepasst werden. Damit kann beispielsweise eine unterschiedliche Beleuchtungsstärke des Objektes, beispielsweise infolge eines Intensitätsverlustes bei polarisierter Beleuchtung, kompensiert werden. Für einen Bediener des optischen Geräts ist dies zudem sehr augenschonend, da ein ständiger Wechsel zwischen verschiedenen Helligkeiten bei der Beobachtung durch das Okular schnell zur Ermüdung und damit zu Fehlern in der Analyse führen kann. Aber auch bei einer Auswertung über eine Kamera muss diese nicht zwischen verschiedenen Belichtungszeiten hin- und herschalten und kann dadurch schneller und einfacher betrieben werden.

In einer vorteilhaften Ausführungsform sind also im Betrieb die Lichtstärken der Beleuchtungsmodi oder der verschiedenen Kontrastverfahren aufeinander abgestimmt oder abstimmbar, so dass bevorzugt das zu beleuchtende Objekt bei jeder Beleuchtungsmethode, also jedem Kontrastverfahren, mit einer annähernd gleichen, vorzugsweise konstanten Beleuchtungsstärke oder einer vorgegebenen Beleuchtungsstärke beleuchtet wird. Demzufolge ist die Lichtstärke der Lichtquellen zumindest einer Schalteinheit, vorzugsweise sämtlicher Schalteinheiten, einstellbar.

So ist es beispielsweise möglich, bei einem Kontrastverfahren ohne Polarisation eine andere Lichtstärke vorzusehen als bei einem Kontrastverfahren mit Polarisation, und bei diesem die Lichtstärke zu erhöhen, da aufgrund des Polarisationselements im Strahlengang der Lichtstrahlen der Lichtquellen ansonsten eine Abschwächung erfolgen kann und damit ein geringerer Lichtstrom auf das Objekt auftrifft.

Zudem kann ein Steuerungsalgorithmus verwendet werden, der bei Umschalten zwischen Kreuzpolarisation und Hellfeld-Beleuchtung die Beleuchtungsstärke automatisch anpasst, so dass die Objekte beim Betrachten oder bei der Bildaufnahme gleich hell erscheinen. Dies hilft weiterhin, die Anpassung der Belichtungszeit der Kamera einzusparen oder Adaptionszeit des Auges zu reduzieren.

In einer Weiterbildung der Erfindung ist daher vorgesehen, die Helligkeit der Lichtquellen in Abhängigkeit von dem gewählten Kontrastverfahren anzupassen, beispielsweise dadurch, dass im Betrieb die Lichtstärke derjenigen Lichtquellen reduziert wird, beispielsweise mittels Abschattung, Filterung oder elektronischer Dimmung, welche direkt auf das Objekt strahlen, während die Lichtquellen, deren Licht das Polarisationselement durchdringen, im Betrieb nicht reduziert oder angepasst oder in sonstiger Weise verändert werden. Es können selbstverständlich auch unterschiedlich helle Lichtquellen verwendet werden, was aber als aufwendiger angesehen wird. Ziel ist es, durch die Anpassung die Beleuchtungsstärke bei den verschiedenen Kontrastverfahren möglichst konstant zu halten, so dass ein konstanter Lichtstrom pro Flächeneinheit auf dem Objekt erhalten wird und damit der LUX-Wert bei verschiedenen Kontrastverfahren annähernd gleich oder möglichst konstant bleibt. Annähernd gleich bedeutet in diesem Sinne, dass der Lichtstrom pro Flächeneinheit auf dem Objekt bei einem Wechsel zwischen zumindest zwei verschiedenen Kontrastverfahren um nicht mehr als 20 %, bevorzugt nicht mehr als 15 % und besonders bevorzugt um nicht mehr als 10 % voneinander abweicht und das zu beleuchtende Objekt bei den verschiedenen Beleuchtungsmethoden mit einer annähernd gleichen Beleuchtungsstärke beleuchtet wird.

Zusammenfassend ist die erfindungsgemäße Umschaltung zwischen den zumindest zwei Konstrastverfahren damit deutlich schneller und präziser als bekannte motorische oder manuelle Umschaltungen. Desweiteren werden bei dem Wechsel der Beobachtungsmethoden keine Teile am Mikroskop bewegt, weshalb keine Vibationen am System erzeugt werden. Derartige Vibrationen erhöhen die Zeit für die Bildaufnahme, da Abklingzeiten einer Vibration vor einer Bildaufnahme einkalkuliert werden müssen.

Klassisch werden heute Mikroskope mit einem manuell zu drehendem Polarisator ausgeliefert. Durch die Erfindung wird nun eine Bedienung über eine externe Benutzerschnittstelle mittels Handsteuerung oder über eine Rechnereinheit wie ein PC mittels geeigneter Software möglich anstelle eines manuellen Eingriffs durch Anfassen und Verdrehen des Polfilters am Gerät.

Dadurch werden Vibrationen am Gerät reduziert und die Ergonomie des Arbeitsschritte verbessert.

Beide Aspekte zusammen ermöglichen damit eine signifikante Zeitersparnis bei der automatisierten Messung wie zum Beispiel bei der Restschmutzanalyse, der sog. "Cleanliness" nach DIN 16232.

Ein weiterer Vorteil einer erfindungsgemäßen Beleuchtungseinrichtung besteht in der Möglichkeit einer Verwendung auch außerhalb von automatisierten Bildanalysesystemen.

Ein weiterer Vorteil liegt in der konstanten Kontrastierung des Objektes. Bei den bekannten Verfahren wie etwa in Dokument DE 20 2009 014 694 U1 beschrieben, erfolgt der Lichtauffall auf das zu untersuchende Objekt aus verschiedenen Neigungswinkeln. Daher werden bei einem Wechsel der Beleuchtungsmethode zeitgleich auch immer diese (Neigungs-)Winkel für die Beleuchtung des Objektes geändert, was zusätzlich zu dem Polarisationseffekt auch zu einem veränderten Kontrastverhalten des Objektes führt. Die erfindungsgemäße Beleuchtungseinrichtung vermeidet diesen Nachteil durch die Segmentierung der Lichtquellen, welche es ermöglicht, den Neigungswinkel auch bei unterschiedlicher Beleuchtung infolge der verschiedenen Kontrastverfahren gleich zu halten bzw. anzugleichen.

Die erfindungsgemäße Beleuchtungsanordnung ist vorzugsweise als Ringlicht, also ringförmig, ausgebildet oder umfasst zumindest ein Ringlicht. Ringlichter, d.h. ringförmig, in der Regel um das Objektiv angeordnete Lichtquellen, sind besonders gut geeignet zur homogenen Beleuchtung von Objekten, insbesondere in abbildenden optischen Geräten wie einem Mikroskop. Sie ermöglichen eine Auflichtbeleuchtung des Objektes im Untersuchungsbereich, also im Bildfeld bzw. Messbereich des Geräts, in dem ein zu analysierendes Objekt optisch erfassbar ist. Im Fall eines Mikroskops oder Stereo-Mikroskops ist das Ringlicht vorzugsweise am Objektiv angebracht.

Ein geeignetes Ringlicht kann zumindest eine Reihe ringförmig angeordneter Lichtquellen umfassen, welche in einer regelmäßigen Anordnung mit gleichen Abständen zueinander konzentrisch um einen Mittelpunkt herum angeordnet sind. Um eine größere Helligkeit zu erreichen, können auch mehrere Reihen ringförmig angeordneter Lichtquellen vorgesehen sein, welche in zwei oder sogar mehr Reihen in einer regelmäßigen Anordnung mit gleichen Abständen zueinander konzentrisch um einen Mittelpunkt herum angeordnet sind.

In besonders günstiger Weise kann, wenn ein Kontrastverfahren mit Fluoreszenz vorgesehen ist, bereits das Ringlicht mit einem integrierten UV-Sperrfilter ausgebildet sein, welcher sowohl dem Schutz der Augen des Anwenders bei Blick durch die Okulare als auch einer deutlichen Bildverbesserung beim Betrieb mit einer Kamera dient. Dies ermöglicht es, beispielsweise eine Digital- oder Videokamera zur Aufnahme von Bildern oder Bildsequenzen einzusetzen, ohne dass diese Kamera über eingebaute Sperrfilter, insbesondere UV-Sperrfilter, verfügen muss. Auf diese Weise kann das Kontrastverfahren mit Fluoreszenz sehr einfach in die Beleuchtungseinrichtung integriert werden, ohne dass weitere aufwendige Anpassungen an dem optischen Gerät erforderlich werden.
Die Lichtquellen selbst können faseroptische Lichtleiter, bevorzugt aber halbleiterbasierte Lichtquellen, vorzugsweise lichtemittierende Dioden, Leuchtdioden (LEDs) und/oder Laserdioden, besonders bevorzugt LED-Lichtquellen oder faseroptische Lichtleiter mit ebensolchen diesen zugeordneten Lichtquellen umfassen.
Insbesondere weiße LED-Lichtquellen ermöglichen eine helle und homogene Beleuchtung des Objektes. Im Sinne der Erfindung werden die Lichtquellen einer Schalteinheit ausgewählt in Abhängigkeit von dem gewünschten Kontrastverfahren. Dies bedeutet, dass beispielsweise für eine Hellfeld-Beleuchtung Lichtquellen ausgewählt werden, welche elektromagnetische Strahlung zumindest einer Wellenlänge im sichtbaren Wellenlängenbereich, also in einem für den Menschen sichtbaren Bereich elektromagnetischer Strahlung von etwa 380 bis 780 nm, emittieren. Grundsätzlich ist das vorgeschlagene Prinzip der segmentierten Beleuchtung aber auch für Strahlungsquellen geeignet, welche im Betriebszustand elektromagnetische Strahlung zumindest einer Wellenlänge in anderen Wellenlängenbereichen emittieren, etwa im UV- oder IR-Bereich. Zur Selektion bestimmter Wellenlängen aus einem von den Lichtquellen emittierten Wellenlängenspektrum können in einer Ausführungsform auch entsprechende Filterelemente eingesetzt werden.

Das Polarisationselement ist bei Kontrastverfahren mit Polarisation vorzugsweise derart im Strahlengang der Lichtquellen angeordnet und ausgebildet, dass nur Licht der Lichtquellen der diesem Kontrastverfahren zugeordneten Schalteinheit durch das Polarisationselement hindurchtritt, bevor es auf das Objekt auftrifft. Das Licht der Lichtquellen der anderen Schalteinheiten kann direkt auf das Objekt geleitet werden, sofern das zugehörige Kontrastverfahren kein polarisiertes Licht vorsieht.

Hierzu kann das Polarisationselement in einer besonders bevorzugten Ausführungsform einstückig ausgebildet sein und Ausnehmungen umfassen, welche derart angeordnet sind, dass sie mit dem Strahlengang der Lichtstrahlen der Lichtquellen derjenigen Schalteinheit fluchten, welche direkt auf das Objekt auftreffen sollen. Das Polarisationselement kann demzufolge Ausnehmungen aufweisen, welche mit den entsprechenden Strahlengängen der Lichtquellen fluchten. Die Perforierung oder Segmentierung des Polarisationselements ist daher vorzugsweise auf die segmentierte Beleuchtung der Beleuchtungsanordnung angepasst.

Besonders einfach kann das Polarisationselement eine Polarisationsfolie umfassen. Die Ausnehmungen können dann sehr einfach, beispielsweise durch Ausstanzen, erzeugt werden. Das Polarisationselement kann ringförmig ausgebildet sein und mit den äußeren Abmessungen auf die Dimensionen des Ringlichtes angepasst sein, so dass Ringlicht und Polarisationselement als Baugruppe zur vielseitigen Verwendung an unterschiedlichen abbildenden optischen Geräten zur Verfügung gestellt werden können.

Typische Ringlichter können einen Außendurchmesser in einem Bereich von 30 bis 130 mm oder sogar darüber hinaus aufweisen. Die zentrische Öffnung des Ringlichts kann dementsprechend einen Durchmesser im Bereich von 18 bis 110 mm aufweisen. Sie können eine hohe Helligkeit abgeben, beispielsweise in einem Abstand von 85 mm eine Beleuchtungsstärke von 110 klx oder in einem Abstand von 30 mm eine Beleuchtungsstärke von 300 klx oder sogar darüber hinaus. Vorzugsweise beträgt die Beleuchtungsstärke in einem Abstand von 50 mm wenigstens 100 klx, bevorzugt wenigstens 110 klx und besonders bevorzugt wenigstens 120 klx. Dies ermöglicht eine helle und homogene Beleuchtung des Objektes.

Der Außendurchmesser des Polarisationselements liegt dabei ebenfalls in einem Bereich von 30 bis 130 mm oder darüber und ist vorzugsweise auf den Außendurchmesser des Ringlichts angepasst. Bei einer Ausbildung als Polarisationsfolie kann sie sehr dünn gehalten sein und eine Dicke von weniger als 5 mm, bevorzugt weniger als 3 mm, besonders bevorzugt weniger als 1 mm aufweisen. Sie ist vorzugsweise in einem geringen Abstand zu dem Ringlicht montiert, um etwa Beugungseffekte bei Durchtritt von Licht durch die Ausnehmungen zu vermeiden und den Platzbedarf zu minimieren. Der Abstand des Polarisationselements zu den Lichtquellen der Beleuchtungsanordnung ist dabei so gewählt, dass der Abstrahlkegel der Lichtquellen vorzugsweise abgedeckt wird. Dies verhindert, dass Fehllicht auf das Objekt gelangen kann, beispielsweise Licht von Lichtquellen durch die Ausnehmungen auf das Objekt gelangt, welches das Polarisationselement durchdringen sollte.

Die erfindungsgemäße Beleuchtungseinrichtung kann flexibel mit einer Vielzahl von Bauformen für Ringlichter kombiniert werden. Dies ermöglicht beispielsweise auch eine Verwendung für Mikroskope, insbesondere für Stereo-Mikroskope, auch für Ringlichter für Stereomikroskope mit mehreren zeitgleich an einen Objektivrevoler montieren Objektiven, bei denen besonders schmale Ringlichter zum Einsatz kommen.

Mit von der Erfindung umfasst ist ferner ein Verfahren zur Beleuchtung eines Objektes, vorzugsweise zur Beleuchtung eines zu analysierenden Objektes in dem Messbereich eines vergrößernden optischen Geräts, wobei das Objekt mittels einer Beleuchtungseinrichtung wechselseitig mit zumindest einem ersten und einem zweiten Kontrastverfahren beleuchtet wird und damit eine Analyse bei zumindest zwei unterschiedlichen Kontrastverfahren ermöglicht.

Das Umschalten zwischen den Kontrastverfahren erfolgt dabei rein elektrisch. In besonders vorteilhafter Weise nutzt das Verfahren zur Beleuchtung eines Objektes die oben beschriebene Beleuchtungseinrichtung.

Mit von der Erfindung umfasst ist ferner ein Verfahren zur
zur optischen Analyse eines Objektes, beispielsweise zur Restschmutzanalyse, wobei ein zu analysierendes Objekt in dem Messbereich eines vergrößernden optischen Geräts platziert wird und wobei das Objekt durch eine Beleuchtungseinrichtung wechselseitig mit unterschiedlichen Kontrastverfahren beleuchtet wird.

Für die Analyse des Objektes können zumindest zwei Bilder mit gleichem Bildausschnitt und gleicher Blickrichtung herangezogen und miteinander vergleichen werden, wobei aber die zumindest zwei Bilder mit verschiedenen Kontrastverfahren erzeugt sind. Für das Verfahren zur optischen Analyse eines Objektes kann besonders günstig für die Beleuchtung das erfindungsgemäße Verfahren zur Beleuchtung und/oder eine erfindungsgemäße Beleuchtungseinrichtung verwendet werden.

Auch wenn vorstehend überwiegend von einem Wechsel zwischen lediglich zwei unterschiedlichen Kontrastverfahren mittels der segmentierten Beleuchtung gesprochen wird, so ist es doch ersichtlich, dass es bei geeigneter Segmentierung von Beleuchtungsanordnung und auch Polarisationselement möglich ist, mehr als zwei, beispielsweise drei oder vier verschiedene Kontrastverfahren mit der erfindungsgemäßen Beleuchtungseinrichtung zu realisieren, wobei dann jedes vorgesehene Kontrastverfahren über jeweils einzeln, unabhängig voneinander schaltbare Lichtquellen der jeweils zugeordneten Schalteinheit verfügt.

So ist es denkbar, ein drittes Kontrastverfahren auf der Basis von UV-Strahlung zu integrieren, wobei dann Segmente bestimmt werden, deren Anzahl wenigstens drei oder ein Vielfaches von drei beträgt. Diese können dann wechselseitig zu drei Schalteinheiten zusammengefasst werden, wobei das Polarisationselement und die Lichtquellen der ersten Schalteinheit zur Abgabe polarisierten Lichtes, diejenigen der zweiten Schalteinheit zur Abgabe nicht polarisierten Lichts und diejenigen der dritten Schalteinheit zur Abgabe von UV-Licht ausgebildet sein können. Dementsprechend können die Lichtquellen der dritten Schalteinheit UV-Lichtquellen umfassen, und das Polarisationselement kann besonders günstig Ausnehmungen für die Strahlengänge dieser UV-Lichtquellen umfassen.
Es ist dem Fachmann ersichtlich, dass sich hieraus vielfältige Kombinationsmöglichkeiten für die Darstellung unterschiedlicher Kontrastverfahren bieten.

Das Objekt kann eine einzelne Probe sein, z.B. ein Filter oder eine Filtermembran, welche im Messbereich des abbildenden optischen Gerätes platziert, also beispielsweise auf den Objektträger aufgelegt wird. Zur Analyse, also bei Betrieb des abbildenden optischen Geräts, wird die Probe dann entsprechend mit der segmentierten Beleuchtung beleuchtet. Selbstverständlich ist es auch möglich, Oberflächen von Körpern oder Bauteilen, beispielsweise von Rohren, von Siliziumwafern oder von Glas oder Glasscheiben, zu analysieren.

Im Bereich der Restschmutzanalyse sind ergänzende Verfahren bekannt, um beispielsweise metallische Partikel in einer Partikelansammlung zu detektieren. Hier ist es bekannt, eine potentiell mit Partikeln behaftete Probe mit einer Spülflüssigkeit zu reinigen, wobei diese Spülflüssigkeit danach möglichst vollständig aufgefangen und anschließend über ein flüssigkeitsdurchlässiges flaches Substrat, beispielsweise eine Filtermembran, geleitet wird. Die Oberfläche des durchströmten Bereichs der Filtermembran ist im Falle einer Verunreinigung der Probe dann mit Partikeln behaftet und kann anschließend analysiert werden. Hierzu kann besonders günstig das erfindungsgemäße Verfahren zur Analyse eingesetzt werden. Das Objekt, beispielsweise die Filtermembran, kann dabei ruhend im Messbereich des vergrößernden optischen Geräts gelagert sein.

Bei einem flächigen Substrat, welches den Bildbereich des vergrößernden optischen Geräts überragt, bietet es sich aber an, eine abschnittsweise, etwa rasterweise Analyse des Objektes durchzuführen, und damit das gesamte Objekt abschnittsweise zu analysieren. Das vergrößernde optische Gerät kann hierzu mit einer geeigneten Bewegungsmechanik ausgestattet sein, welche vorzugsweise auch einen automatischen Betrieb erlaubt. Dieser automatische Betrieb zur abschnittsweisen Analyse des Objekts ist dabei vorzugsweise mit der Beleuchtung, also mit der Beleuchtungseinrichtung, gekoppelt, so dass bei jedem Bildausschnitt zur Analyse direkt die zumindest zwei verschiedenen Kontrastverfahren zum Einsatz kommen können.

In anderen Worten, das erfindungsgemäße Verfahren zur optischen Analyse kann, gerade bei größeren Objekten im Messbereich wie einer Filtermembran, derart ausgebildet sein, dass dieses Objekt rasterweise automatisch ausgewertet wird, wobei jeder Bildausschnitt des Objektes automatisch der Reihe nach mit den vorgesehenen Kontrastverfahren beaufschlagt wird, beispielsweise polarisiertem und nicht-polarisiertem Licht. Der Vergleich der zumindest zwei Bilder pro Bildausschnitt kann dann rechnerunterstützt in einer Rechnereinheit erfolgen.

Das erfindungsgemäße Verfahren erlaubt es damit, eine vollautomatische Analyse einer Filtermembran im Rahmen einer Restschmutzanalyse durchzuführen, wobei die Filtermembran dabei wechselseitig mit polarisiertem und mit nicht-polarisiertem Licht beaufschlagt werden kann. Aufgrund des raschen, rein elektrischen Umschaltens zwischen den Kontrastverfahren ist es möglich, in nur einem Durchlauf das gesamte Objekt auf Basis der vorgesehenen Kontrastverfahren zu analysieren. Insbesondere ist es nicht erforderlich, erst eine erste Serie von Bildern des Objektes bei einem ersten Kontrastverfahren und sodann eine zweite Serie von Bildern des Objektes bei einem zweiten Kontrastverfahren zu erstellen, was den Nachteil mit sich bringt, dass jeder Bildbereich des Objekts zweimal angesteuert werden muss und damit das gesamte Objekt zweimal rasterweise gescannt wird. Mittels des Verfahrens können damit besonders einfach und sicher metallische Partikel aus einer Partikelansammlung auf der Filtermembran detektiert werden.

Mit von der Erfindung umfasst ist schließlich auch ein abbildendes optisches Gerät zur mikroskopischen Analyse eines Objektes, umfassend ein Mikroskop, ein Stereo-Mikroskop, ein Makroskop, ein Digitalmikroskop oder ein ähnliches Gerät. Das abbildende optische Gerät umfasst dabei vorzugsweise eine erfindungsgemäße Beleuchtungseinrichtung wie vorstehend ausgeführt.

Das abbildende optische Gerät kann mit weiteren Komponenten zu einem optischen System zusammengeführt sein, umfassend eine Rechen- oder Auswerteeinheit. Ebenfalls vorteilhaft kann eine Bewegungsmechanik vorgesehen sein, die ein abschnittsweises Verschieben des Objektes erlaubt, so dass auch größere Objekte abschnittsweise analysiert werden können.

Weitere Einzelheiten der Erfindung ergeben sich aus der Beschreibung der dargestellten Ausführungsbeispiele und den angefügten Ansprüchen.

### Die Zeichnungen zeigen:

- Fig. 1: ein Ringlicht mit in einer Reihe ringförmig angeordneten Lichtquellen in einer Draufsicht,
- Fig. 2: ein Polarisationselement in einer Draufsicht,
- Fig.: 3schematisch eine Beleuchtungssituation einer erfindungsgemäßen Beleuchtungseinrichtung in einer Seitenansicht,
- Fig. 4ein: Ringlicht mit in zwei Reihen ringförmig angeordneten Lichtquellen in einer Draufsicht,
- Fig. 5ein: Ringlicht mit in zwei Reihen ringförmig angeordneten Lichtquellen im Betrieb in einer Schrägansicht,
- Fig. 6eine: Übersichtsdarstellung eines abbildenden optischen Systems, umfassend ein Stereo-Mikroskop und eine erfindungsgemäße Beleuchtungseinrichtung,
- Fig. 7a, 7b: zwei Bildausschnitte einer Partikelansammlung bei unterschiedlichen Kontrastverfahren, und
- Fig. 8.: ein Ringlicht, bei dem mittels elektronischem Umschalten zwischen zwei Kontrastverfahren gewechselt werden kann, in einer Schrägansicht,
- Fig. 9a, 9b: eine Ausführungsform des in Fig. 1 gezeigten Ringlichtes mit in einer Reihe ringförmig angeordneten Lichtquellen, bei welchem ein Kontrastverfahren unter Fluoreszenz vorgesehen ist (9a), und mit eingefügtem Sperrfilter (9b),
- Fig. 10: eine exemplarische Darstellung des Emissionsspektrums einer für die Erfindung geeigneten UV-Lichtquelle für ein Kontrastverfahren unter Fluoreszenz, und
- Fig. 11: eine exemplarische Darstellung des Transmissionsverhaltens eines für die Erfindung geeigneten UV-Sperrfilters.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

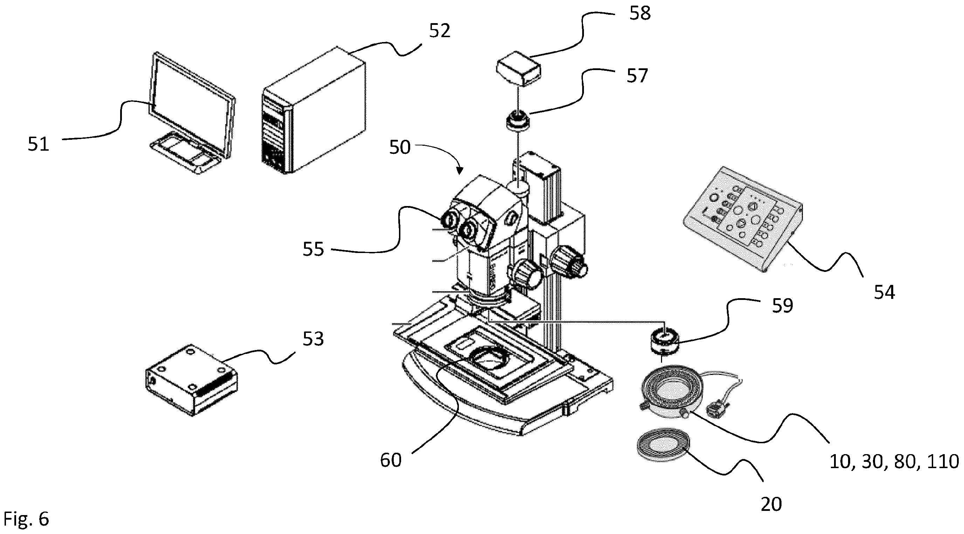

Gegenstand der Erfindung ist eine Beleuchtungseinrichtung 1 zur Beleuchtung eines zu analysierenden Objektes, vorzugsweise zur Beleuchtung eines Objektes in einem abbildenden optischen Gerät. Ein derartiges abbildendes optisches Gerät ist vorzugsweise ein vergrößerndes abbildendes optisches Gerät zur mikroskopischen Analyse bei unterschiedlichen Kontrastverfahren, beispielsweise ein Mikroskop oder ein Stereo-Mikroskop, wie es rein beispielhaft in einer schematischen Übersichtsdarstellung mit einem optischen System in Fig. 6 gezeigt ist.

Die erfindungsgemäße Beleuchtungseinrichtung 1 ermöglicht es, zumindest zwei verschiedene Kontrastverfahren zur Analyse zu nutzen. Diese zumindest zwei verschiedenen Kontrastverfahren unterscheiden sich dabei in der Wellenlänge der elektromagnetischen Strahlung der Lichtquellen und/oder der Polarisation des Lichts, mit dem das zu analysierende Objekt beaufschlagt wird. Die Kontrastverfahren umfassen dabei zumindest eine der folgenden Beleuchtungsmethoden: Hellfeld, Dunkelfeld, Polarisation, Schrägbeleuchtung oder Fluoreszenz.

Eine Beleuchtung im Hellfeld meint dabei eine Beleuchtung, bei der eine flache Beobachtungsebene so beleuchtet wird, dass zumindest Teile des an einer Probe reflektierten Lichts in die Optik fallen. Der flache Probenhintergrund wird dabei "hell" abgebildet.

Im Gegensatz dazu meint eine Beleuchtung im Dunkelfeld eine Beleuchtung der Probe unter einem Beleuchtungswinkel, welcher flacher ist als der Öffnungswinkel des Objektives. Dadurch fällt von dem eingestrahlten Licht nichts in die Optik, eine flache Probe beziehungsweise der ebene Hintergrund verbleiben dann "dunkel". Erst durch Erhebungen an der Probe (z.B. durch Partikel) wird das eingestrahlte Licht in einem anderen Winkel reflektiert und kann in die Optik fallen. Hierdurch werden z.B. Kanten oder die Ränder von Erhebungen hell dargestellt.

Eine Beleuchtung mit Polarisation meint in diesem Sinne, dass das Licht der Lichtquelle vor dem Auftreffen auf das Objekt polarisiert wird, wozu ein Polarisationselement, beispielsweise ein Polarisationsfilter, vorgesehen sein kann. Das Polarisationselement ist dazu ausgebildet, das Licht der Lichtquelle insbesondere linear zu polarisieren. Zur Umsetzung des Kontrastverfahrens Polarisation ist weiterhin an geeigneter Stelle des optischen Systems ein Analysator vorzusehen.

Eine Schrägbeleuchtung meint allgemein eine Beleuchtung, bei der die Hauptabstrahlrichtung der Lichtquelle nicht senkrecht auf das Objekt erfolgt, sondern unter einem Winkel bzw. Neigungswinkel auf das Objekt gerichtet ist. Eine Schrägbeleuchtung kann eine Kontraststeigerung bewirken.

Eine Beleuchtung unter Fluoreszenz meint eine Anregung einer Probe mit elektromagnetischer Strahlung im beispielsweise ultravioletten Wellenlängenbereich, wobei fluoreszierende Stoffe der Probe durch die Anregung dann Licht anderer, längerer Wellenlängen abgeben (Stokes-Regel). Fluoreszenz kann auch mit anderen oder durch andere Wellenlängenbereiche als UV angeregt werden kann.

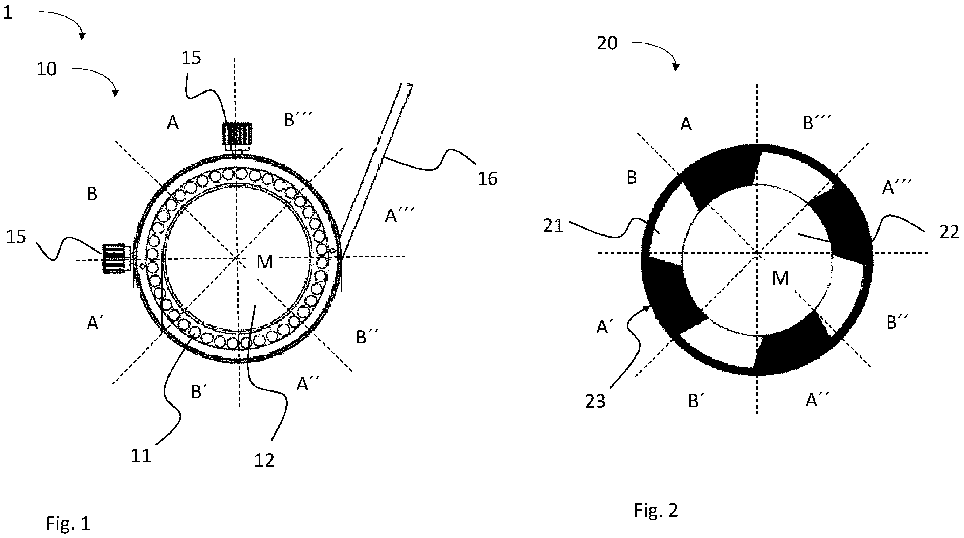

Rein beispielhaft wird nachfolgend eine Ausführungsform einer Beleuchtungseinrichtung 1 detaillierter beschrieben. Bei der in Fig. 1 gezeigten Ausführungsform der Beleuchtungseinrichtung 1 kommt zum einen eine Hellfeld-Beleuchtung und zum anderen eine Beleuchtung mit Polarisation zum Einsatz.

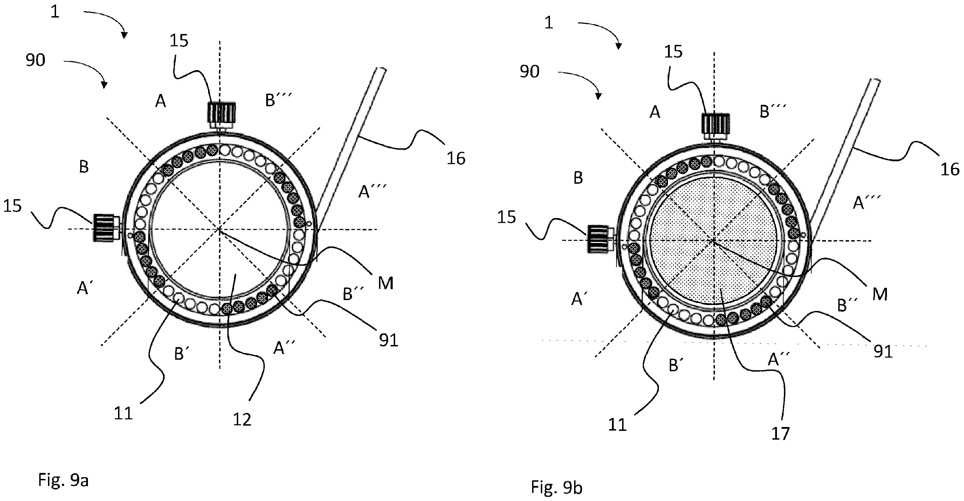

Selbstverständlich können auch andere Beleuchtungsmethoden im Sinne der Erfindung kombiniert werden, etwa Hellfeld-Beleuchtung mit Fluoreszenz-Beleuchtung wie weiter unten in Fig. 9a gezeigt am Beispiel einer weiteren Ausführungsform einer Beleuchtungseinrichtung 1. Es sei an dieser Stelle angemerkt, dass die Ausführungsformen mit einem Polarisationselement wie nachfolgend beschrieben nicht zwingend für die Erfindung sind, sondern eine besonders geeignete Ausführungsform für ein Kontrastverfahren mit Beleuchtung in Polarisation darstellen.

Die Beleuchtungseinrichtung umfasst in dem Beispiel dabei eine Beleuchtungsanordnung mit einer Gesamtheit von zumindest zwei Lichtquellen, welche im Betrieb elektromagnetische Strahlung in Richtung auf das Objekt abstrahlen, und ein Polarisationselement, welches im Strahlengang zwischen der Beleuchtungsanordnung und dem Objekt angeordnet ist.

Erfindungsgemäß geeignete Lichtquellen umfassen halbleiterbasierte Lichtquellen, vorzugsweise lichtemittierende Dioden, Leuchtdioden (LEDs) und/oder Laserdioden, besonders bevorzugt LED-Lichtquellen oder faseroptische Lichtleiter mit ebensolchen diesen zugeordneten Lichtquellen.

Eine günstige Beleuchtungsanordnung mit einer ringförmigen Anordnung von Lichtquellen 11 zeigt Fig. 1. Die hier gezeigte ringförmige Anordnung der Lichtquellen 11 wird auch als Ringlicht 10 bezeichnet und ist in einer Draufsicht gezeigt, wobei das Ringlicht 10 eine Reihe ringförmig angeordneter Lichtquellen 11 umfasst, welche in einer regelmäßigen Anordnung mit gleichen Abständen zueinander konzentrisch um einen Mittelpunkt M herum angeordnet sind. Der den Mittelpunkt umgebende Bereich des Ringlichts 10 weist eine kreisförmige Öffnung 12 auf, so dass eine Durchsicht durch das Ringlicht 10 gut möglich ist.

Die Beleuchtungsanordnung des Ringlichts 10 umfasst in dem Ausführungsbeispiel insgesamt 40 weiße LED-Lichtquellen.

Für die Segmentierung der Lichtquellen 11 ist es ratsam, wenn deren Anzahl zumindest der Anzahl der vorgesehenen Kontrastverfahren entspricht oder ein Vielfaches hiervon darstellt. Bei zwei Kontrastverfahren sollte deren Anzahl also wenigstens zwei oder bevorzugt ein Vielfaches von zwei betragen.

Die im Beispiel weißen LED-Lichtquellen 11 ermöglichen eine helle, homogene und energiesparende Beleuchtung eines Objektes, etwa im Messbereich eines Mikroskops. Hierzu wird im Betrieb von den Lichtquellen 11 elektromagnetische Strahlung emittiert und auf das Objekt gerichtet.

Das Ringlicht 10 umfasst rein schematisch gezeigte Zuleitungen 16, welche die elektrische Kontaktierung und die Steuerung der Lichtquellen 11 ermöglicht. Das Ringlicht 10 in dem Ausführungsbeispiel umfasst ferner zwei Einstellrädchen 15, mit denen die Lichtstärke der Lichtquellen 11 manuell geändert werden kann.

Die Gesamtheit von 40 Lichtquellen 11 der ringförmigen Beleuchtungsanordnung des Ringlichts 10 ist in diesem Ausführungsbeispiel symmetrisch in insgesamt acht Segmente A, A', A", A'", B, B', B", B'" eingeteilt. In der Darstellung sind die einzelnen Segmente durch gestrichelte Linien voneinander abgegrenzt. Es ist für den Fachmann ersichtlich, dass sowohl die Anzahl der Lichtquellen 11 als auch deren Einteilung in acht Segmente lediglich ein Ausführungsbeispiel darstellt und auch andere Einteilungen möglich und sinnvoll sein können. Eine größere Anzahl von Lichtquellen pro Segment und/oder eine größere Anzahl von Segmenten pro Schalteinheit ermöglichen insgesamt eine bessere, homogenere Beleuchtung des Objekts.

Die Lichtquellen 11 der acht Segmente sind abwechselnd zu einer ersten und einer zweiten Schalteinheit zusammengefasst. Im Beispiel gehören die Lichtquellen der Segmente A, A', A", A'" zu der ersten Schalteinheit und die Lichtquellen der Segmente B, B', B", B'" zu der zweiten Schalteinheit. Dabei sind die zu einer Schalteinheit gehörenden Lichtquellen, also die Lichtquellen der Segmente A, A', A", A'" sowie die Lichtquellen der Segmente B, B', B", B''', unabhängig voneinander ansteuerbar ausgebildet. Die Aufteilung der 40 Lichtquellen auf die acht Segmente erfolgt gleichmäßig, so dass die Anzahl der Lichtquellen 11, die ein jedes Segment A, A', A", A''', B, B', B", B'" umfasst, gleich ist. In dem Beispiel beträgt die Anzahl von Lichtquellen 11 pro Segment bei einer Gesamtheit von 40 Lichtquellen 5 Lichtquellen 11 pro Segment A, A', A", A''', B, B', B", B'''. Die Zuordnung der Lichtquellen 11 der Segmente zu den beiden Schalteinheiten ist dabei derart gewählt, dass die nicht nebeneinanderliegenden Segmente zu einer Schalteinheit zusammengefasst werden.

Im Sinne der Erfindung wird eine hohe Homogenität in der Beleuchtung des Objektes bei den vorgesehenen Kontrastverfahren angestrebt. Vorzugsweise beträgt daher die Anzahl der Segmente pro Kontrastverfahren zumindest zwei oder besser ein Vielfaches von zwei, um auch bei segmentierter Beleuchtung eine hohe Homogenität zu erhalten. Bei zwei vorgesehenen Kontrastverfahren, etwa, um eine polarisierte und eine nicht-polarisierte Beleuchtung zu ermöglichen, hat sich eine Anzahl von insgesamt acht Segmenten als sehr vorteilhaft herausgestellt, sowohl in Bezug auf die Ansteuerbarkeit als auch in Bezug auf die Homogenität des Lichts und eine Vermeidung von Schattenwurf. Damit umfasst jede der beiden Schalteinheiten dann genau vier Segmente, wobei nicht benachbarte Segmente zusammengenommen werden.

Der Hintergrund hierzu ist folgender: Ein Ringlicht verfügt über die Grundfläche eines Kreises. Um eine homogene Beleuchtung eines Objekts zu erreichen, welches im Zentrum des Ringlichts, also im mittelpunktsnahen Bereich des Kreises angeordnet ist, ist es günstig, dass Objekt bei jedem Kontrastverfahren aus jeder Richtung zu beleuchten. Hierzu bietet es sich an, die Kreisfläche in zumindest zwei, besser drei, noch besser in zumindest vier Kreisausschnitte mit jeweils gleichlangen Kreisbögen einzuteilen und für jeden Kreisausschnitt bei jedem vorgesehenen Kontrastverfahren zumindest ein Segment mit Lichtquellen vorzusehen. Einer Unterteilung in beispielsweise vier Kreisausschnitte führt dann bei zwei vorgesehenen Kontrastverfahren zu 2 ^{∗} 4 = 8 Segmenten, in denen die Lichtquellen gleichmäßig unterteilt werden. Eine feinere Unterteilung der Kreisfläche führt zu einer noch homogeneren Beleuchtung, allerdings führt die erforderliche Verdrahtung und Ansteuerung auch zu einem höheren Aufwand.

Die Anzahl der Lichtquellen 11 und die Aufteilung dieser Lichtquellen 11 zu den Segmenten wird dabei derart gewählt, dass die Anzahl der Lichtquellen 11 pro Segment gleich ist. Damit ist in einer besonders bevorzugten Ausführungsform die Anzahl der Lichtquellen 11 gleich oder ein Vielfaches der Anzahl an geplanten Segmenten.

Die konkrete Anordnung von Lichtquellen 11 und deren Einteilung in Segmente erfordert allerdings, dass die elektrische Kontaktierung der Lichtquellen 11 derart ausgebildet ist, dass die zu den Segmenten einer Schalteinheit gehörenden Lichtquellen 11 unabhängig von denjenigen zu den Segmenten einer anderen Schalteinheit gehörenden Lichtquellen 11 ein- und ausgeschaltet oder in ihrer Lichtstärke oder in einem anderen Parameter verändert werden können. Eine sehr große Anzahl an Segmenten, beispielsweise mehr als 16 Segmente, erfordert daher eine entsprechend komplexe Verkabelung und Ansteuerung.

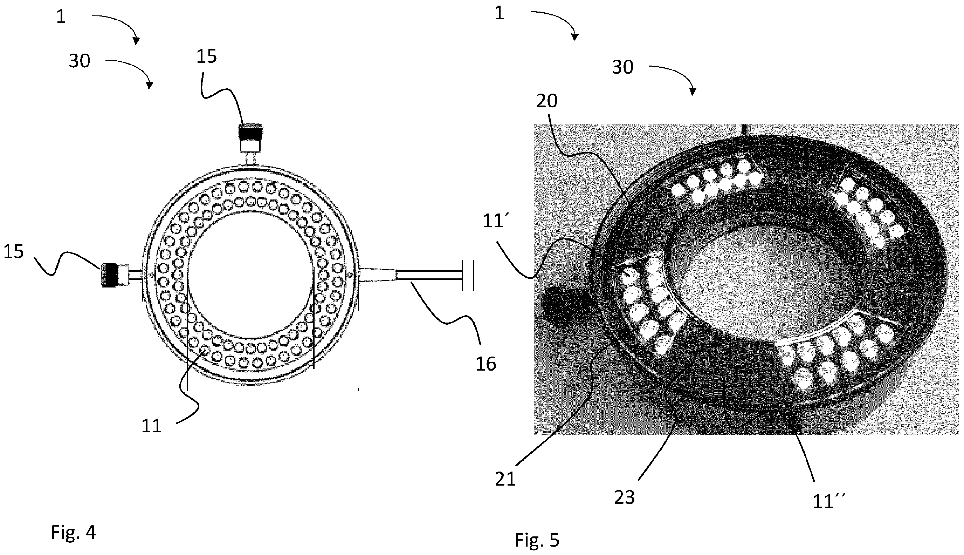

Ein erfindungsgemäßes Polarisationselement 20 zeigt Fig. 2. Eine mögliche Anordnung des Polarisationselements 20 zusammen mit einem Ringlicht 30 in einem abbildenden optischen Gerät 50 zeigt Fig. 5.

Das in der Fig. 2 rein beispielhaft gezeigte Polarisationselement 20 ist als flaches, ebenes Substrat ausgebildet und mit seinen äußeren Abmessungen geometrisch an das Ringlicht 30 angepasst. Es umfasst ferner eine zentrische, kreisförmige Öffnung 22 um einen Mittelpunkt M, welche in ihren Durchmesser von Vorteil mindestens dem Durchmesser der Öffnung 12 des Ringlichts 30 entspricht. Dies ermöglicht es, Ringlicht 30 und Polarisationselement 20 in dem optischen Gerät koaxial zueinander und koaxial zum Objektiv des optischen Gerätes bzw. koaxial zu dem optischen Strahlengang anzuordnen, so dass in montierter Position ein freier Blick auf das Objekt durch das Okular ermöglicht wird.

Das Polarisationselement 20 ist mit Ausnehmungen 21 ausgebildet, welche derart angeordnet sind, dass sie mit dem Strahlengang von Lichtstrahlen der Lichtquellen 11 derjenigen Schalteinheit fluchten, welche im Betrieb direkt auf das Objekt auftreffen. Die Ausnehmungen 21 des Polarisationselements 20 korrespondieren damit mit den Segmenten des Ringlichts.

Das Ringlicht 30 und das Polarisationselement 20 sind dabei in geringem Abstand zueinander angeordnet, um die Gefahr von Abschattungseffekten oder Fremdlicht-Einwirkung, insbesondere Streulicht, in Verbindung mit dem Polarisationselement 20 zu verringern. Vorzugsweise beträgt der Abstand zu den Lichtquellen der Beleuchtungsanordnung nicht mehr als 10 mm, bevorzugt nicht mehr als 7 mm und besonders bevorzugt nicht mehr als 5 mm, um einerseits eine kompakte Bauform der Beleuchtungseinrichtung zu erhalten und den Messbereich nicht zu sehr einzuschränken, und anderseits im Betrieb der Beleuchtungseinrichtung unerwünschte optische Effekte wie beispielsweise Lichtbeugung an den Kanten der Ausnehmungen des Polarisationselements infolge der segmentierten Beleuchtung zu vermeiden. Auch andere Abstände sind möglich und denkbar, beispielsweise können sich unterschiedliche Abstände ergeben, wenn die Lichtquellen nicht auf einem ebenen Substrat, sondern auf einer gewölbten Grundfläche angeordnet sind.

Im Betrieb der Beleuchtungseinrichtung kann das Licht der zu einer Schalteinheit gehörenden Lichtquellen 11 ungehindert durch die Ausnehmungen 21 des Polarisationselements 20 hindurchtreten und auf das Objekt auftreffen, sofern keine Polarisation gewünscht ist. Die Strahlung der Lichtquellen 11 einer anderen Schalteinheit kann dagegen durch das Polarisationselement 20 geführt werden, bevor es auf das Objekt auftrifft, sofern eine Polarisation gewünscht ist.

Wenn beispielsweise das Ringlicht 10 aus Fig. 1 koaxial mit dem Polarisationselement 20 verbunden wird, um eine erfindungsgemäße Beleuchtungseinrichtung zu bilden, so wird im Betrieb elektromagnetische Strahlung der Lichtquellen 11, welche zu den Segmenten A, A', A" und A'" gehören, durch das Polarisationselement 20 geführt, bevor es auf das Objekt auftrifft. Dies bedeutet, dass das Licht dieser Lichtquellen 11 polarisiert wird. Licht der Lichtquellen 11, welche zu den Segmenten B, B', B" und B'" gehören, kann direkt auf das Objekt auftreffen und wird demzufolge nicht polarisiert.

In dem gezeigten Ausführungsbeispiel ist das Polarisationselement 20 als Polarisationsfolie ausgebildet. Diese lässt sich sehr einfach herstellen und geometrisch sehr gut an das Ringlicht 10 oder 30, mit dem es verwendet werden soll, anpassen. Die erforderlichen Ausnehmungen 21 können dann sehr einfach, beispielsweise durch Ausstanzen, erzeugt werden. In dem abgebildeten Beispiel sind die Lichtquellen 11' der Segmente eingeschaltet, welche zu dem Kontrastverfahren ohne Polarisation gehören, so dass im Betrieb Lichtstrahlen dieser Lichtquellen 11' ohne Polarisation abgegeben werden können. Selbstverständlich ist es auch möglich, anstelle eines Polarisationselements mit Ausnehmungen 21 auch ein Polarisationselement 20 aus einzelnen Segmenten zusammenzusetzen, welche von der Form her der segmentierten Beleuchtung angepasst sind.

Durch Schalten der beiden Schalteinheiten, also einem Einschalten und Ausschalten der Lichtquellen 11 der einen Schalteinheit und derjenigen der anderen Schalteinheit, wird damit eine Beleuchtung eines zu analysierenden Objektes realisiert, bei welcher zwei unterschiedliche Beleuchtungsmethoden angewandt werden können, welche sich in diesem Ausführungsbeispiel in der Polarisierung des auf das Objekt auftreffenden Lichts unterscheiden.

Unabhängig von der Schaltung der Lichtquellen 11 ist bei dem wechselseitigen Umschalten der Lichtquellen 11 auch der gemittelte Neigungswinkel, unter dem das Licht der Lichtquellen 11 auf das Objekt auftrifft, gleich. Dies ist dem Umstand geschuldet, dass die Anordnung der Lichtquellen 11 eines jeden Segments gleich bezogen auf den Mittelpunkt M der Beleuchtungseinrichtung ist und diese Lichtquellen 11 jeweils unter einem gleichen Winkel ausgerichtet sind.

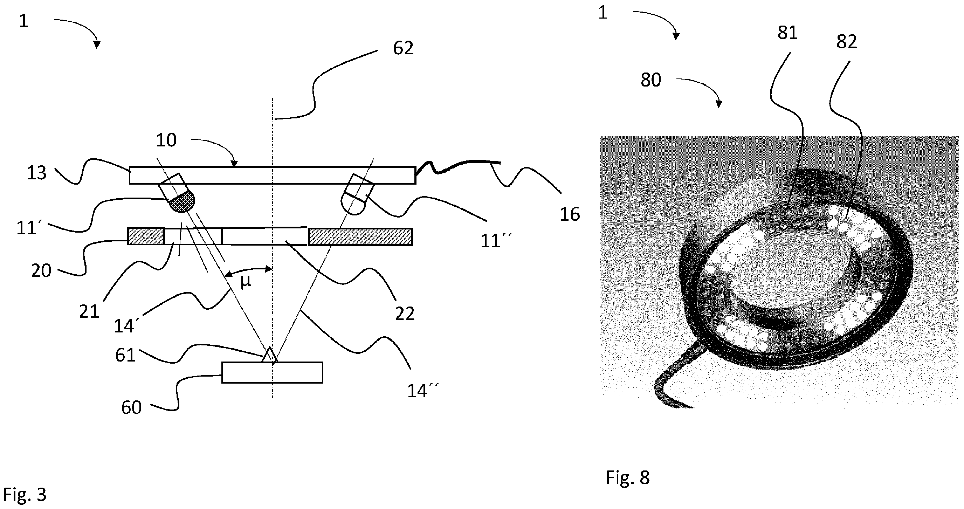

Eine typische Beleuchtungssituation einer erfindungsgemäßen Beleuchtungseinrichtung anhand eines einfachen Beispiels zeigt Fig. 3 rein schematisch. Die Beleuchtungseinrichtung ist in diesem Fall ein Ringlicht 10, welches in einer Seitenansicht gezeigt ist. Das Ringlicht 10 umfasst einen Träger 13, an dem die einzelnen Lichtquellen 11 befestigt sind. Die Lichtquellen 11 sind unter einem Winkel ausgerichtet, so dass sie ein von dem Träger 13 beabstandet angeordnetes Objekt anstrahlen können. Rein schematisch ist ebenfalls ein Objekthalter 60 dargestellt, welcher typischerweise Bestandteil des optischen Gerätes 50 ist (nicht dargestellt). Auf dem Objekthalter 60 liegt ein zu analysierendes Objekt 61 auf.

Ferner ist ein Polarisationselement 20 ebenfalls in einer Seitenansicht gezeigt, welches beabstandet von dem Ringlicht 10 angeordnet ist. In montierter Position sind Ringlicht 10 und Polarisationselement 20 koaxial zur Objektivachse 62 des abbildenden optischen Gerätes 50 angeordnet. Der Abstand zwischen Ringlicht 10 und Polarisationselement 20 ist rein der Übersichtlichkeit ausgewählt. In montierter Position ist die Beleuchtungseinrichtung koaxial zur Objektivachse 62 des optischen Gerätes angeordnet.

Dargestellt in dem Beispiel ist eine Beleuchtungssituation, bei der eine Lichtquelle 11' in Betrieb ist und eine andere Lichtquelle 11" nicht in Betrieb ist. Der Übersichtlichkeit sind weitere Lichtquellen 11 in dieser Darstellung nicht enthalten. Dabei sind die Lichtquellen 11' und 11" derart ausgerichtet, dass die Haupt- Abstrahlrichtung 14', 14" des Lichtes, in der Darstellung angedeutet mit jeweils einer punktierten Linie, in einem gleichen Winkel µ zur optischen Achse 62 steht. Die optische Achse 62 verläuft in diesem Falle parallel zur Oberflächennormalen des Objekthalters 60. Unabhängig vom Betrieb der einzelnen Lichtquellen 11, 11', 11" ist damit dieser Neigungswinkel µ gleich groß. In der dargestellten Beleuchtungssituation ist zudem erkennbar, dass Licht der Lichtquelle 11', welche in Betrieb ist, durch die Ausnehmung 21 des Polarisationselements direkt auf das Objekt 61 auftreffen kann. Bei einem Umschalten, also einem Abschalten der Lichtquelle 11' und einem Einschalten der Lichtquelle 11", würde Licht der Lichtquelle 11" dann durch das Polarisationselement 20 geführt und auf diese Weise linear polarisiert werden.

Fig. 4 zeigt eine weitere Ausführungsform einer besonders geeigneten Beleuchtungsanordnung, bei der eine ringförmige Anordnung von Lichtquellen 11 in zwei Reihen gegeben ist. Ein derartiges zweireihiges Ringlicht 30, welches schematisch in einer Draufsicht gezeigt ist, ist geeignet, um Objekte sehr hell und homogen auszuleuchten. Beide Ringe umfassen eine gleiche Anzahl an Lichtquellen, was eine erfindungsgemäße Segmentierung begünstigt. Im Beispiel umfassen der innere und der äußere Ring jeweils 40 Lichtquellen 11, welche als LED-Lichtquellen ausgebildet sind. Aufgrund des größeren Durchmessers der Kreisbahn des äußeren Rings ist der Abstand zwischen den einzelnen Lichtquellen 11 des äußeren Rings größer als derjenige zwischen den einzelnen Lichtquellen 11 des inneren Rings.

Fig. 5 zeigt in einem Ausführungsbeispiel in einer Schrägansicht, wie eine segmentierte Beleuchtung bei dem zweireihigen Ringlicht 30 aus Fig. 4 im Betrieb erfolgen kann. Das zweireihige Ringlicht 30 ist wiederum in acht Segmente unterteilt, wobei jedes Segment eine gleiche Anzahl an Lichtquellen aufweist. Bei der Segmentierung im Falle einer zwei oder mehrreihigen Anordnung von Lichtquellen ist darauf zu achten, dass auch der mittlere Neigungswinkel der Lichtquellen eines jeden Segments vorzugsweise gleich ist. Im Beispiel ist dies dadurch erreicht, dass eine gleiche Anzahl von Lichtquellen 11 des inneren und eine gleiche Anzahl von Lichtquellen 11 des äußeren Rings jedem Segment zugeordnet sind. Jedes Segment des zweireihigen Ringlichts 30 umfasst demnach eine gleiche Anzahl von Lichtquellen 11 des inneren und des äußeren Rings. Im Beispiel sind jedem Segment 5 Lichtquellen 11 des inneren und 5 Lichtquellen des äußeren Rings zugeordnet.

Fig. 6 zeigt eine Übersichtsdarstellung eines optischen
Systems, umfassend ein abbildendes optisches Gerät 50, im
Beispiel ein Stereo-Mikroskop, und eine erfindungsgemäße
Beleuchtungseinrichtung. Die Beleuchtung erfolgt dabei
im Auflichtbetrieb. Eine Auflichtbeleuchtung ist notwendig
bei intransparenten Proben. In Verbindung mit einem Stereo-
Mikroskop als abbildendem optischen Gerät kann eine hohe
Tiefenschärfe erreicht werden.

Das dargestellte optische System umfasst eine Anzeigevorrichtung 51, eine Recheneinheit 52, auf welcher Speicher und Auswertesoftware vorgesehen sein können, und eine externe Kontrolleinheit 53. Ein binokularer Fototubus 55 ermöglicht einem Benutzer, das zu analysierende Objekt (nicht dargestellt) zu betrachten. Ferner ist eine Kameraeinheit 58 vorgesehen, welche mittels eines Adapters 57 mit dem abbildenden optischen Gerät 50 gekoppelt werden kann.

Weiterhin ist ein Wechselobjektiv 59 vorgesehen. Zusammen mit diesem wird die erfindungsgemäße Beleuchtungseinrichtung, umfassend die Beleuchtungsanordnung, im Beispiel eine Ringlicht 10 oder 30, und ein Polarisationselement 20, mit dem optischen Gerät 50 verbunden. Vorgesehen ist ferner eine externe Kontrolleinheit 54, welche das Ringlicht steuert und mit der Recheneinheit 52 verbunden werden kann.

Die Erfindung ermöglicht eine elektronische Umsschaltung zwischen zumindest zwei verschiedenen Kontrastverfahren, etwa für eine Beleuchtung mit nicht-polarisiertem Licht bei Betrieb der einen Schalteinheit und polarisiertem Licht bei Betrieb der anderen Schalteinheit. Es ist auch möglich, mit der erfindungsgemäßen Beleuchtungseinrichtung mehr als zwei verschiedene Kontrastverfahren zu realisieren.

Ein Umschalten zwischen den Kontrastverfahren ist oftmals für die Beurteilung von Materialeigenschaften des durch ein abbildendes optisches Gerät 50, etwa ein Mikroskop, beobachteten Objektes 61 sehr hilfreich oder sogar notwendig. Mit erfindungsgemäßen Beleuchtungseinrichtung können zumindest zwei verschiedene Kontrastverfahren in einem abbildenden optischen Gerät 50 unabhängig voneinander realisiert werden, wobei die Lichtquellen 11 der ersten und der zweiten Schalteinheit dann entsprechend wechselseitig betrieben werden.

Der wechselseitige Betrieb erfolgt dabei durch das Ansteuern der zu einer Schalteinheit gehörenden Lichtquellen 11, beispielsweise über die Kontrolleinheit 54, welche die Schaltung der jeweiligen Lichtquellen mit Strom übernimmt. Die Kontrolleinheit 54 ist im Beispiel ein externes Gerät, kann aber auch Bestandteil der Beleuchtungseinrichtung oder aber auch in das abbildende optische Gerät integriert sein. Das optische System in dem Ausführungsbeispiel aus Fig. 6 umfasst ferner eine externe Benutzerschnittstelle mit einer separaten Kontrolleinheit 53, so dass ein Bediener die Steuerung übernehmen kann. Die erfindungsgemäße Beleuchtungseinrichtung ist damit besonders gut geeignet, gemeinsam mit einem abbildenden optischen Gerät 50 zur mikroskopischen Analyse betrieben zu werden.

Auf diese Weise ist es beispielsweise möglich, metallische Partikel in einer Partikelansammlung zu detektieren. Hierzu werden zwei Bilder des Objektes 61 miteinander verglichen, wobei sich diese zwei Bilder in ihrer Beleuchtung zur Erzeugung des Bildes, insbesondere deren Polarisationseinstellung, unterscheiden. Demnach werden ein erstes Bild mit polarisiertem Licht und ein zweites Bild mit nicht polarisiertem Licht erzeugt, und die Dimensionen und die Lage, sowie, soweit möglich, die Art des Partikels wird nachfolgend aus den beiden Bildern des Objektes mittels beispielsweise einer Bildanalysesoftware ermittelt.

Die Betrachtung der Bilder des zu analysierenden Objektes 61 in dem abbildenden optischen Gerät kann entweder über den Fototubus 55 durch den Bediener oder über die Digital- oder Videokamera 58 erfolgen, welche die Bilder aufnimmt. Zur Auswertung umfasst die Rechnereinheit 52 von Vorteil neben einem Speicher auch eine Bildanalysesoftware oder sonstige rechnerunterstützte Analyseverfahren zur automatischen morphologischen Analyse, vorzugsweise zur Detektion metallischer Partikel. Die Unterscheidung metallischer Partikel von nicht-metallischen Partikeln erfolgt dann anhand des Reflexionsverhaltens. Das Umschalten zwischen den zumindest zwei unterschiedlichen Polarisationseinstellungen erfolgt rein elektrisch.

Dies ermöglicht es, das wechselseitige Umschalten zwischen den Kontrastverfahren wartungsfrei und vibrationsarm zu betreiben, da keine beweglichen Teile vorhanden sind. Zudem erfolgt der Wechsel zwischen den beiden Kontrastverfahren allein durch einen Schaltvorgang der Rechnereinheit oder ein elektrisches Signal, so dass das Umschalten quasi ohne Zeitverlust erfolgt. Damit ist es möglich, auch eine Vielzahl von Bildern oder Bildausschnitten wechselseitig in kürzester Zeit zu analysieren.

In einer Weiterbildung der Erfindung wird die Helligkeit der Lichtquellen 11 in Abhängigkeit von dem Kontrastverfahren bei Betrieb eingestellt, wobei die Lichtstärke derjenigen Lichtquellen 11 reduziert wird, welche direkt auf das Objekt strahlen, also der Hellfeld-Beleuchtung entsprechen, während die Lichtquellen 11, deren Licht das Polarisationselement 20 durchdringen, im Betrieb nicht gedimmt werden. Es können selbstverständlich auch unterschiedlich helle Lichtquellen 11 verwendet werden, um die Helligkeitsunterschiede auszugleichen, sofern ein konstanter Lichtstrom pro Flächeneinheit auf dem Objekt erhalten wird und damit die Beleuchtungsstärke annähernd gleich, vorzugsweise konstant bleibt.

Die erfindungsgemäße Beleuchtungseinrichtung kann flexibel mit einer Vielzahl von Bauformen für Ringlichter 10, 30 kombiniert werden. Dies ermöglicht beispielsweise eine Verwendung für Mikroskope, insbesondere für Stereo-Mikroskope, auch für Stereomikroskope mit mehreren zeitgleich an einen Objektivrevoler montieren Objektiven, bei denen besonders schmale Ringlichter 10 zum Einsatz kommen.

Die Erfindung stellt damit ein Verfahren zur Beleuchtung eines Objektes zur Verfügung, vorzugsweise zur Beleuchtung eines zu analysierenden Objektes 61 in dem Messbereich eines vergrößernden optischen Geräts 50, wobei das Objekt 61 mittels einer Beleuchtungseinrichtung wechselseitig mit zumindest einem ersten und einem zweiten Kontrastverfahren beleuchtet wird und damit eine Analyse bei zumindest zwei unterschiedlichen Kontrastverfahren ermöglicht.

Das Verfahren bietet den großen Vorteil, dass unabhängig von dem aktuellen Kontrastverfahren der Schattenwurf des Objektes und die Helligkeit konstant gehalten werden können.

Die Erfindung stellt damit ferner ein Verfahren zur
zur optischen Analyse eines Objektes 61 zur Verfügung, beispielsweise zur Restschmutzanalyse, wobei ein zu analysierendes Objekt 61 in dem Messbereich eines vergrößernden optischen Geräts 50 platziert wird und wobei das Objekt 61 durch die Beleuchtungseinrichtung wechselseitig mit unterschiedlichen Kontrastverfahren beleuchtet wird.

Das Objekt 61 kann eine einzelne Probe sein, welcher im Messbereich des abbildenden optischen Gerätes 50 auf dem Objektträger 60 platziert wird. Zur Analyse, also bei Betrieb des abbildenden optischen Geräts, wird die Probe dann entsprechend beleuchtet.

Um im Rahmen einer Restschmutzanalyse metallische Partikel in einer Partikelansammlung zu detektieren, kann aber auch eine Filtermembran wie oben erläutert entsprechend vorbereitet werden, welche sodann mittels des abbildenden optischen Gerätes 50 und der erfindungsgemäßen Beleuchtungseinrichtung im Messbereich des optischen Geräts 50 analysiert wird. Ein derartiges flächiges Substrat, welches den Bildbereich des vergrößernden optischen Geräts 50 überragen kann, kann abschnittsweise analysiert werden. Das vergrößernde optische Gerät 50 ist hierzu von Vorteil mit einer geeigneten Bewegungsmechanik ausgestattet, welche einen automatischen Betrieb erlaubt. Dieser automatische Betrieb zur abschnittsweisen Analyse des Objekts 61 bzw. einer Filtermembran ist dabei von Vorteil mit der erfindungsgemäßen Beleuchtungseinrichtung gekoppelt, so dass beispielsweise bei jedem Bildausschnitt zur Analyse direkt die vorgesehenen Kontrastverfahren zum Einsatz kommen können und erst, wenn beide Bilder aufgenommen wurden, erfolgt eine Bewegung des Objektes zu dem nächstfolgenden Abschnitt.

Demzufolge kann etwa eine Filtermembran rasterweise automatisch ausgewertet werden, wobei jeder Bildausschnitt des Objektes automatisch mit polarisiertem und mit nicht-polarisiertem Licht wechselseitig beaufschlagt und sodann das Objekt abschnittsweise weiterbewegt wird. Der Vergleich der zumindest zwei Bilder pro Bildausschnitt kann dann rechnerunterstützt in der Rechnereinheit 52 erfolgen.

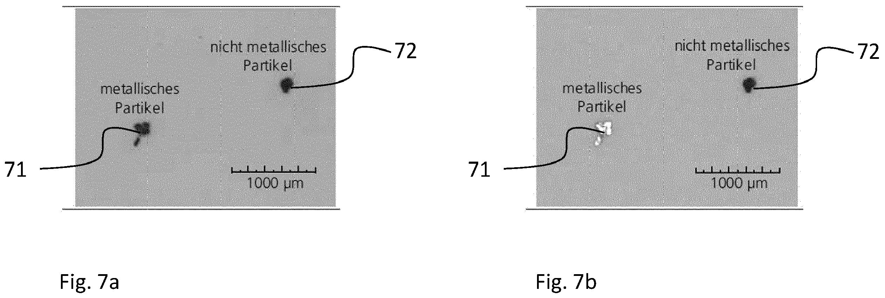

Zwei Bildausschnitte einer Partikelansammlung auf einer Filtermembran bei unterschiedlichen Kontrastverfahren zeigen die Fig. 7a, 7b. In Fig. 7a, welche einen Bildausschnitt mit polarisierter Beleuchtung mit einem um 90° gedrehtem Polarisationselement vor der Kamera zeigt, sind lediglich die äußeren Konturen der beiden auf der Filtermembran vorhandenen Partikel 71, 72 zu sehen. In Fig. 7b, welche denselben Bildausschnitt zeigt, wurde das Bild bei nicht-polarisierter Beleuchtung aufgenommen. Deutlich erkennbar ist das metallische Glänzen des Partikels 71.

Das erfindungsgemäße Verfahren erlaubt es damit, eine vollautomatische Analyse der Filtermembran im Rahmen einer Restschmutzanalyse durchzuführen, wobei die Filtermembran dabei wechselseitig mit polarisiertem und mit nicht-polarisiertem Licht beaufschlagt wird. Aufgrund des raschen, rein elektrischen Umschaltens zwischen polarisiertem und nicht-polarisiertem Licht ist es möglich, in nur einem Durchlauf das gesamte Objekt mit wechselseitiger Beleuchtung zu analysieren. Insbesondere ist es nicht erforderlich, erst eine erste Serie von Bildern des Objektes bei einem ersten Kontrastverfahren und sodann eine zweite Serie von Bildern des Objektes bei einem zweiten Kontrastverfahren zu erstellen, was den Nachteil mit sich bringt, dass jeder Bildbereich des Objekts zweimal angesteuert werden muss und damit das gesamte Objekt zweimal rasterweise gescannt wird. Mittels des Verfahrens können damit besonders einfach und sicher metallische Partikel aus einer Partikelansammlung auf der Filtermembran detektiert werden.

Das abbildende optische System 50, welches in Fig. 6 gezeigt ist, kann ein Ringlicht und/oder eine Kontrolleinheit VisiLED MC1500 umfassen, wie sie von der Fa. SCHOTT AG, Mainz, erhältlich sind. Diese Steuerung ermöglichen eine Achtel-Segmentbeleuchtung und Weiterschaltung um jeweils 1/8 Segment und ist damit besonders gut geeignet, um ein wechselseitiges Umschalten zwischen Polarisation und Nicht-Polarisation zu ermöglichen.

Über die Speichertasten des MC1500 können für die beiden Beleuchtungssituationen, also die Polarisation und die Nicht-Polarisation, auch mit unterschiedlichen Beleuchtungsintensitäten belegt werden. Diese sind optional auch über einen Fußschalter schaltbar. Sowohl die verwendeten Ringlichter als auch der MC1500 können bei der erfindungsgemäßen Beleuchtungseinrichtung ohne weitere Modifikation eingesetzt werden, so dass lediglich ein zu dem Ringlicht passender, perforierter Polarisator erzeugt werden muss.

Eine andere Ausführungsform der erfindungsgemäßen Beleuchtung zeigt Fig. 8. Bei diesem Beispiel ist ein Ringlicht 80 vorgesehen, bei dem mittels elektronischem Umschalten zwischen zwei Kontrastverfahren gewechselt werden kann, wobei sich bei einem Wechsel des Kontrastverfahrens die Wellenlänge oder der Wellenlängenbereich oder das Wellenlängenspektrum der von den Lichtquellen 81, 82 abgegebenen elektromagnetischen Strahlung ändert.

Damit ermöglicht die Beleuchtungseinrichtung mit dem Ringlicht 80 die Darstellung zweier verschiedener Kontrastverfahren mit unterschiedlicher Wellenlänge. Hierzu sind die Lichtquellen 81, 82 wiederum in regelmäßiger Form in Segmente, in dem Beispiel in insgesamt acht Segmente, unterteilt und entsprechend verdrahtet, um unabhängig voneinander geschaltet werden zu können. Allerdings sind die Lichtquellen 81 zur Abgabe von UV-Licht ausgebildet, also zu Abstrahlung von elektromagnetischer Strahlung im UV-Wellenlängenbereich, wohingegen die Lichtquellen 82 ausgebildet sind, Licht im sichtbaren Wellenlängenbereich zu emittieren. Das Ringlicht 80 ist in diesem Beispiel nicht mit einem Polarisationselement 20 ausgestattet. Selbstverständlich ist es aber möglich, für das Ringlicht 80 ein weiteres Kontrastverfahren, beispielsweise für eine Beleuchtung mit Polarisation, vorzusehen. Hierzu kann ein Polarisationselement 20 wie oben erläutert hinzugefügt werden, wobei die Ausnehmungen 21 dann entsprechend der segmentierten Beleuchtung angepasst werden.

Es ist ersichtlich, dass sich aus den hier gezeigten Ausführungsformen vielfältige Kombinationsmöglichkeiten für die Darstellung unterschiedlicher Kontrastverfahren in einer Beleuchtungseinrichtung zur Beleuchtung eines zu analysierenden Objektes, vorzugsweise zur Beleuchtung eines Objektes in einem abbildenden optischen Gerät, zur mikroskopischen Analyse bei zumindest zwei verschiedenen Kontrastverfahren, ergeben.

Kontrastverfahren im UV-Wellenlängenbereich bieten sich beispielsweise an für eine Rissprüfung, wobei eine fluoreszierende Flüssigkeit auf eine Materialoberfläche aufgetragen wird, welche durch Kapillarkräfte in ggf. vorhandene Risse einzieht und mit diesem Kontrastverfahren unter UV-Licht detektiert werden kann.

In ähnlicher Weise können auch Lackprüfungen mit der erfindungsgemäßen Beleuchtungseinrichtung vorgenommen werden, um etwa eine auf eine Oberfläche aufgetragene Lackschicht auf Einschlüsse, Verdickungen oder Risse zu prüfen.

Neben den oben genannten Filtermembranen im Rahmen der Partikelanalyse können selbstverständlich auch alle anderen Materialien oder Objekte analysiert werden.

In einer besonderen Ausführungsform der Erfindung umfasst die Beleuchtungseinrichtung 1 zumindest ein Kontrastverfahren mit einer Beleuchtung unter Fluoreszenz, vorzugsweise als UV-Hellfeldbeleuchtung. Diese kann in unterschiedlicher Weise mit zumindest einem zweiten Kontrastverfahren verbunden werden, beispielsweise mit einer normalen Hellfeld-Beleuchtung und/oder mit einer Beleuchtung mit Polarisation.

Rein exemplarisch zeigt die Fig. 9a eine derartige
Ausführungsform des in Fig. 1 gezeigten Ringlichtes
mit in einer Reihe ringförmig angeordneten Lichtquellen,
bei welchem ein Kontrastverfahren unter Fluoreszenz zum
Einsatz kommt in Verbindung mit einem Kontrastverfahren im
Hellfeld. Die Beleuchtungseinrichtung 1 ermöglicht damit
eine Analyse mit einem Kontrastverfahren unter Hellfeld-
Beleuchtung und unter Fluoreszenz-Beleuchtung, bevorzugt bei gleichen mittleren Beleuchtungswinkeln und gleichen
mittleren Abständen der verwendeten Segmente.

Anstelle der Hellfeld-Beleuchtung kann natürlich auch eine
Analyse unter Beleuchtung mit Polarisation vorgesehen sein.

Ebenso ist es beispielsweise auch möglich, ergänzend ein
drittes Kontrastverfahren zu integrieren, also zum Beispiel
zur Analyse einer Probe unter Hellfeld-Beleuchtung, unter
Fluoreszenz-Beleuchtung und unter Beleuchtung mit
Polarisation.

Die Beleuchtungseinrichtung 1 umfasst dazu Lichtquellen mit
Zumindest zwei unterschiedlichen Abstrahlcharakteristiken hinsichtlich der Wellenlänge der elektromagnetischen Strahlung. So sind zum einen Lichtquellen 11, im Beispiel LED-Lichtquellen wie auch in dem Ausführungsbeispiel der Fig. 1 gezeigt, vorgesehen, zum anderen UV-Lichtquellen 91, im Beispiel LEDs mit einer ultravioletten Abstrahlcharakteristik, sogenannte UV-LEDs. Diese können beispielsweise UV-LEDs mit einer vorzugsweise schmalbandigen Abstrahlcharakteristik und/oder mit einem Maximum der Intensität der elektromagnetischen Strahlung bei einer Wellenlänge von beispielsweise etwa 365 nm, 375 nm oder auch 380 nm sein, wie sie beispielsweise von der Fa. Nichia erhältlich sind.

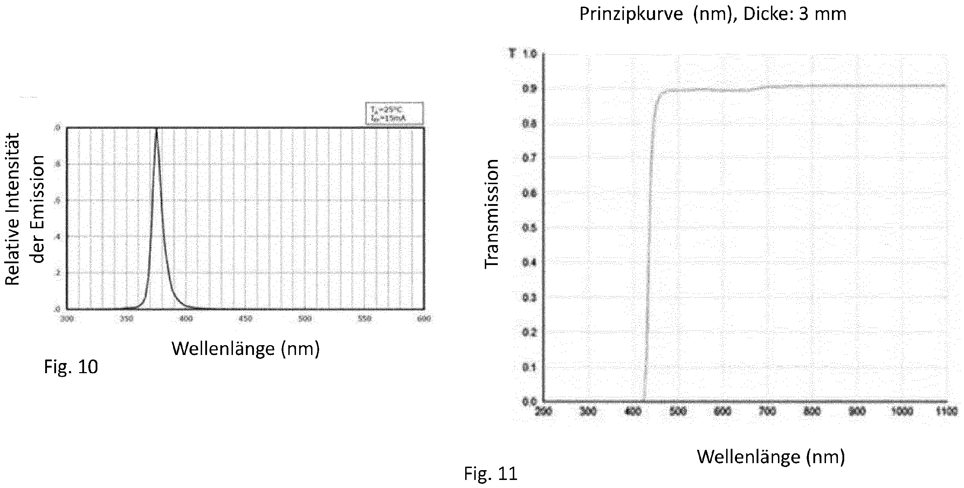

Fig. 10 zeigt rein exemplarisch eine Darstellung des Emissionsspektrums einer derartigen UV-Lichtquelle für ein Kontrastverfahren unter Fluoreszenz, wobei hier das Maximum der Intensität der Emission bei einer Wellenlänge von etwa 375 nm liegt.

Die Beleuchtungseinrichtung 1 ist ähnlich wie auch bei den anderen gezeigten als Ringlicht 90 ausgebildet. Wie anhand der Fig. 9a gut zu erkennen ist und ohne Beschränkung auf das Ausführungsbeispiel, ist die Anzahl der Lichtquellen 11, 91 jedes Segments A, A', A", A''', B, B', B", B'", gleich. In anderen Worten, die Anzahl der Lichtquellen 11 und der UV-Lichtquellen 91 ist identisch. Im Beispiel verfügt jedes Segment über jeweils fünf Lichtquellen 11, 91, und die Beleuchtungseinrichtung 1 damit bei jeweils vier Segmenten pro Schalteinheit über insgesamt 20 "normale" Lichtquellen 11 und weitere 20 UV-Lichtquellen 91.

Hierbei sollte allerdings berücksichtigt werden, dass eine Gleichmäßigkeit in der Beleuchtung, insbesondere hinsichtlich der Beleuchtungsstärke, häufig angestrebt und wünschenswert ist. Hierdurch kann erreicht werden, dass sich Schattenwurf und Helligkeit des Objektes bei einem Wechsel des Kontrastverfahrens während der Analyse nicht ändern. Dies kann dazu führen, dass die Anzahl der UV-Lichtquellen 91 von der Anzahl der übrigen Lichtquellen 11 abweichen kann, und beispielsweise mehr UV-Lichtquellen 91 als andere Lichtquellen 11 vorgesehen sind, um eine möglichst homogene Beleuchtungsstärke zu erreichen.

Im Sinne der Erfindung ist es aber im Allgemeinen vorteilhaft, wenn zumindest die Anordnung der Lichtquellen 11, 91 in jedem der Segmente einer Schalteinheit identisch ist, um einen homogenen Schattenwurf auch bei einem Wechsel der Kontrastverfahren zu erreichen.

In dem Beispiel ist ebenso gut zu erkennen, dass der gemittelte Neigungswinkel, unter dem das Licht der Lichtquellen 11, 91 eines Segmentes auf das Objekt auftrifft, gleich ist. Diese Forderung lässt sich, wie dargestellt, besonders einfach erfüllen durch einen konstanten Abstand sämtlicher Lichtquellen 11, 91 von dem Mittelpunkt M sowie einer gleichen Anordnung der Lichtquellen 11, 91 in jedem Segment.

Auf diese Weise kann mit einer Beleuchtungseinrichtung 1, umfassend das Ringlicht 90, besonders vorteilhaft eine Probe sowohl unter Fluoreszenz-Beleuchtung als auch mit einem weiteren Kontrastverfahren analysiert werden, wobei eine konstante, homogene Beleuchtung unter gleichen gemittelten Anstrahlwinkeln ermöglicht werden kann. Die Beleuchtungseinrichtung 1, umfassend das Ringlicht 90, ist daher besonders gut verwendbar in oder mit einem optischen Gerät 50 zur Fluoreszenzmikroskopie.

Sofern für die weitere Analyse Bild-aufnehmende Vorrichtungen beziehungsweise eine Kamera 58, insbesondere eine Digitalkamera oder eine Videokamera zum Einsatz kommen soll, so ist diese vorzugsweise derart ausgebildet, dass sie bevorzugt im sichtbaren, ggf. bis in den infraroten Wellenlängenbereich hinein Bilder aufnehmen kann, was jedoch nicht für alle geeigneten Kameratypen zutrifft, so dass ein unerwünschter UV-Anteil beispielsweise mittels UV-Sperrfiltern kompensiert werden kann bzw. muß, um unverfälschte Aufnahmen zur erhalten.

Erfindungsgemäß ist ergänzend vorgesehen, die Beleuchtungseinrichtung zur Beleuchtung eines zu analysierenden Objektes und/oder das abbildende optische Gerät zur optischen, insbesondere (licht-)mikroskopischen Analyse, beispielsweise ein Stereomikroskop, mit einem entsprechenden Sperrfilter, insbesondere mit einem UV-Sperrfilter, auszustatten, welcher elektromagnetische Strahlung, insbesondere im ultravioletten Bereich, sperren kann. In einer besonders bevorzugten Ausführungsform umfasst das Ringlicht 90 daher einen UV-Sperrfilter, welcher, wie bereits vorher beschrieben zum Schutz der Augen eines Betrachters und/oder zur unverfälschten Erfassung von Bildern mit Kameras, die auch im UV Bereich sensitiv sind, vorteilhaft ist.

In dem Ausführungsbeispiel der Fig. 9b ist das Ringlicht 90 mit einem Filter bzw. Sperrfilter 17 als Farbfilter oder als Langpassfilter gezeigt, im Beispiel ein LP 435, erhältlich von der Fa. Schott, Mainz. Der Sperrfilter 17 ist im zentrischen Bereich des Ringlichts 90 angeordnet.
Alternativ ist es beispielsweise auch möglich, einen steilbandigeren Sperrfilter 17, etwa einen entsprechend beschichteten Interferenzfilter, einzusetzen, zum Beispiel ein LP 420, ebenfalls erhältlich von der Fa. Schott, Mainz.
Auch ein Sperrfilter LP 345, ebenfalls erhältlich von der Fa. Schott, Mainz, eignet sich für die Erfindung.

Es ist zweckdienlich, Sperrfilter und UV-Lichtquellen zumindest hinsichtlich der Wellenlängenspektren aufeinander abzustimmen.

Fig. 11 schließlich zeigt eine exemplarische Darstellung des Transmissionsverhaltens eine geeigneten UV-Sperrfilters am Beispiel eines Langpassfilters LP 435, erhältlich von der Fa. Schott, Mainz.

### Bezugszeichenliste:

- 1: Beleuchtungseinrichtung
- 10: Ringlicht
- 11,11', 11", 11''': Lichtquelle
- 12: Öffnung
- 13: Träger
- 14', 14": Abstrahlrichtung
- 15: Einstellrädchen
- 16: Zuleitung
- 17: Sperrfilter
- 20: Polarisationselement
- 21: Ausnehmung
- 22: Öffnung
- 30: Ringlicht
- 50: Optisches Gerät
- 51: Anzeigevorrichtung
- 52: Recheneinheit
- 53: Kontrolleinheit
- 54: Kontrolleinheit
- 55: Fototubus
- 57: Adapter
- 58: Kamera
- 59: Wechselobjektiv
- 60: Objekthalter
- 61: Objekt, Probe
- 62: Objektivachse
- 71: Partikel
- 72: Partikel
- 80: Ringlicht
- 81: Lichtquelle
- 82: Lichtquelle
- 90: Ringlicht
- 91: UV-Lichtquelle
- A, A', A", A''': Segment
- B, B', B", B'": Segment
- M: Mittelpunkt

## Patentansprüche

1. Beleuchtungseinrichtung zur Beleuchtung eines zu analysierenden Objektes, vorzugsweise zur Beleuchtung eines Objektes in einem abbildenden optischen Gerät, zur mikroskopischen Analyse bei zumindest zwei verschiedenen Kontrastverfahren, umfassend
eine Beleuchtungsanordnung mit einer Gesamtheit von zumindest zwei Lichtquellen, welche im Betriebszustand elektromagnetische Strahlung zumindest einer Wellenlänge in Richtung auf das Objekt abstrahlen können, wobei
die Gesamtheit der Lichtquellen in Segmente umfassend zumindest eine Lichtquelle eingeteilt ist,
die Anzahl der Segmente zumindest der Anzahl an darzustellenden Kontrastverfahren entspricht,
die Lichtquellen der Segmente in zumindest eine erste und eine zweite Schalteinheit zusammengefasst werden, welche unabhängig voneinander vorzugsweise elektronisch ansteuerbar sind, und wobei jeweils die Lichtquellen einer Schalteinheit jeweils einem Kontrastverfahren zugeordnet sind.

2. Beleuchtungseinrichtung nach vorstehendem Anspruch, **dadurch gekennzeichnet, dass** eine Schalteinheit zumindest ein, bevorzugt zwei, drei und besonders bevorzugt vier oder mehr Segmente umfasst, wobei im Fall von mehr als einem Segment vorzugsweise nicht aneinander angrenzende Segmente einer jeweiligen Schalteinheit zugeordnet sind, und wobei vorzugsweise jedes Segment zumindest zwei, bevorzugt drei und besonders bevorzugt mehr als drei Lichtquellen umfasst.

3. Beleuchtungseinrichtung nach einem der vorstehenden Ansprüche, **dadurch gekennzeichnet, dass** die Beleuchtungsanordnung ringförmig als Ringlicht ausgebildet ist oder zumindest ein Ringlicht umfasst.

4. Beleuchtungseinrichtung nach einem der vorstehenden Ansprüche, **dadurch gekennzeichnet, dass** die Lichtquellen halbleiterbasierte Lichtquellen, vorzugsweise lichtemittierende Dioden, Leuchtdioden (LEDs) und/oder Laserdioden, besonders bevorzugt LED-Lichtquellen oder faseroptische Lichtleiter mit ebensolchen diesen zugeordneten Lichtquellen und/oder UV-Lichtquellen, insbesondere UV-Leuchtdioden, umfassen.

5. Beleuchtungseinrichtung nach einem der vorstehenden Ansprüche, **dadurch gekennzeichnet, dass** die Anzahl der Lichtquellen, die ein jedes Segment umfasst, und/oder der gemittelte Neigungswinkel, unter dem das Licht der Lichtquellen eines Segmentes auf das Objekt auftrifft, gleich ist.

6. Beleuchtungseinrichtung nach einem der vorstehenden Ansprüche, **dadurch gekennzeichnet, dass** sich im Betriebszustand die zumindest zwei verschiedenen Kontrastverfahren in zumindest einer Wellenlänge der elektromagnetischen Strahlung der Lichtquellen und/oder der Polarisation des Lichts unterscheiden.

7. Beleuchtungseinrichtung nach einem der vorstehenden Ansprüche, **dadurch gekennzeichnet, dass** die zumindest zwei Kontrastverfahren zumindest eine der folgenden Beleuchtungsmethoden umfassen: Hellfeld, Dunkelfeld, Polarisation, Schrägbeleuchtung oder Fluoreszenz.

8. Beleuchtungseinrichtung nach einem der vorstehenden Ansprüche, **dadurch gekennzeichnet, dass** das Umschalten von einem lichtmikroskopischen Kontrastverfahren zu einem anderen elektrisch erfolgt, wobei das Umschalten weniger als 500 Millisekunden, bevorzugt weniger als 300 Millisekunden und ganz besonders bevorzugt weniger als 100 Millisekunden beträgt.

9. Beleuchtungseinrichtung nach einem der vorstehenden Ansprüche, **dadurch gekennzeichnet, dass** ein Kontrastverfahren eine Beleuchtung mit Polarisation umfasst.

10. Beleuchtungseinrichtung nach vorstehendem Anspruch, **dadurch gekennzeichnet, dass** die Beleuchtungseinrichtung ein Polarisationselement umfasst, welches vorzugsweise im Strahlengang zwischen der Beleuchtungsanordnung und dem Objekt angeordnet ist, und/oder Lichtquellen umfasst, welche in der Lage sind, polarisiertes Licht abzugeben.

11. Beleuchtungseinrichtung nach einem der vorstehenden Ansprüche, **dadurch gekennzeichnet, dass** das Polarisationselement derart ausgebildet ist, dass im Betrieb Licht der Lichtquellender dem zugehörigen Kontrastverfahren zugeordneten Schalteinheit vor Auftreffen auf das Objekt das Polarisationselement durchdringt und/oder das Licht der Lichtquellen einer Schalteinheit eines Kontrastverfahrens ohne Polarisation direkt auf das Objekt auftrifft, ohne das Polarisationselement zu durchdringen.

12. Beleuchtungseinrichtung nach einem der vorstehenden Ansprüche, **dadurch gekennzeichnet, dass** das Polarisationselement Ausnehmungen umfasst, welche derart angeordnet sind, dass sie mit dem Strahlengang der Lichtstrahlen der Lichtquellen derjenigen Schalteinheit fluchten, welche im Betrieb direkt auf das Objekt auftreffen.

13. Beleuchtungseinrichtung nach einem der vorstehenden Ansprüche, **dadurch gekennzeichnet, dass** das Polarisationselement eine Polarisationsfolie umfasst.

14. Beleuchtungseinrichtung nach einem der vorstehenden Ansprüche, **dadurch gekennzeichnet, dass** eine Recheneinheit und/oder eine externe Benutzerschnittstelle vorgesehen ist für das Umschalten zwischen den Kontrastverfahren.

15. Beleuchtungseinrichtung nach einem der vorstehenden Ansprüche, **dadurch gekennzeichnet, dass** im Betrieb die Lichtstärke der Lichtquellen zumindest einer Schalteinheit einstellbar ist, so dass bei einem Wechsel von einem Kontrastverfahren zu einem anderen die Beleuchtungsstärke annähernd gleich, vorzugsweise konstant bleibt.

16. Beleuchtungseinrichtung nach einem der vorstehenden Ansprüche, **dadurch gekennzeichnet, dass**
die Lichtquellen UV-Lichtquellen mit vorzugsweise schmalbandiger Abstrahlcharakteristik und/oder mit einem Maximum der Intensität der elektromagnetischen Strahlung bei einer Wellenlänge von etwa 365 nm, 375 nm oder auch 380 nm umfassen.

17. Beleuchtungseinrichtung nach dem vorstehenden Anspruch, **dadurch gekennzeichnet, dass** das Ringlicht einen Sperrfilter, insbesondere einen UV-Sperrfilter umfasst, insbesondere einen der Farbfilter LP 435, LP 420 oder LP 345.

18. Verfahren zur Beleuchtung eines Objektes, vorzugsweise zur Beleuchtung eines zu analysierenden Objektes in dem optisch erfassbaren Messbereich eines vorzugsweise vergrößernden optischen Geräts, wobei das Objekt mittels einer Beleuchtungseinrichtung im Betrieb, vorzugsweise mit einer Beleuchtungseinrichtung nach einem der vorsehenden Ansprüche, unabhängig voneinander mit zumindest zwei verschiedenen Kontrastverfahren beleuchtet wird, und wobei sich die zumindest zwei verschiedenen Kontrastverfahren in der Wellenlänge oder dem Wellenlängenspektrum der elektromagnetischen Strahlung der Lichtquellen der Beleuchtungseinrichtung und/oder der Polarisation des Lichts unterscheiden.

19. Verfahren zur Beleuchtung eines Objektes nach vorstehendem Anspruch, wobei die zumindest zwei verschiedenen Kontrastverfahren zumindest eine der folgenden Beleuchtungsmethoden umfassen: Hellfeld, Dunkelfeld, Polarisation, Schrägbeleuchtung oder Fluoreszenz.

20. Verfahren zur Beleuchtung eines Objektes nach einem der beiden vorstehenden Ansprüche, wobei ein Kontrastverfahren eine Beleuchtung mit polarisiertem Licht und ein zweites Kontrastverfahren eine Hellfeld-Beleuchtung mit nicht-polarisiertem Licht umfasst.

21. Verfahren zur Beleuchtung eines Objektes nach einem der drei vorstehenden Ansprüche, wobei ein Kontrastverfahren eine Hellfeld-Beleuchtung mit nicht-polarisiertem Licht und eine Beleuchtung unter Fluoreszenz umfasst.

22. Verfahren zur Beleuchtung eines Objektes nach einem der drei vorstehenden Ansprüche 18-20, wobei ein Kontrastverfahren eine Hellfeld-Beleuchtung mit polarisiertem Licht und eine Beleuchtung unter Fluoreszenz umfasst.

23. Verfahren zur Beleuchtung eines Objektes nach einem der vorstehenden Ansprüche 18-22, wobei ein erstes Kontrastverfahren eine Hellfeld-Beleuchtung und ein zweites Kontrastverfahren eine Beleuchtung mit Fluoreszenz umfasst

24. Verfahren zur Beleuchtung eines Objektes nach einem der vorstehenden Ansprüche 18-23, wobei das Umschalten zwischen den beiden Kontrastverfahren rein elektrisch erfolgt, wobei das Umschalten weniger als 500 Millisekunden, bevorzugt weniger als 300 Millisekunden und ganz besonders bevorzugt weniger als 100 Millisekunden beträgt.

25. Verfahren zur Beleuchtung eines Objektes nach einem der vorstehenden Ansprüche 18-24, wobei der gemittelte Neigungswinkel, mit dem Licht der Lichtquellen einer Schalteinheit auf das Objekt auftrifft, bei den Kontrastverfahren gleich ist.

26. Verfahren zur Beleuchtung eines Objektes nach einem der vorstehenden Ansprüche 18-25, wobei die Anzahl der zu den Schalteinheiten gehörenden Lichtquellen bei verschiedenen Kontrastverfahren gleich ist und/oder das zu beleuchtende Objekt bei verschiedenen Kontrastverfahren mit annähernd gleicher, vorzugsweise konstanter Beleuchtungsstärke beleuchtet wird.

27. Verfahren zur optischen Analyse eines Objektes, wobei ein zu analysierendes Objekt in dem Messbereich eines vergrößernden optischen Geräts platziert wird und wobei das Objekt zur Analyse durch eine Beleuchtungseinrichtung wechselseitig mit zumindest zwei unterschiedlichen Kontrastverfahren beaufschlagt wird.

28. Verfahren zur optischen Analyse eines Objektes nach vorstehendem Anspruch, umfassend ein Verfahren zur Beleuchtung nach einem der vorstehenden Ansprüche 18-26 und/oder eine Beleuchtungseinrichtung nach einem der Ansprüche 1-17.

29. Verfahren zur optischen Analyse nach einem der vorstehenden Ansprüche, wobei bei verschiedenen Kontrastverfahren die Lichtquellen derart einstellbar sind, so dass das Objekt im Betrieb bei zumindest zwei verschiedenen Kontrastverfahren mit einer annähernd gleichen, vorzugsweise konstanten Beleuchtungsstärke beleuchtet wird.

30. Verfahren zur optischen Analyse nach einem der vorstehenden Ansprüche, wobei das Objekt, insbesondere bei der Restschmutzanalyse, ein flächiges Substrat, insbesondere eine Filtermembran umfasst.

31. Abbildendes optisches Gerät zur mikroskopischen Analyse eines Objektes, umfassend ein Mikroskop, ein Stereo-Mikroskop, ein Makroskop oder ein Digitalmikroskop, umfassend eine Beleuchtungseinrichtung nach einem der vorstehenden Ansprüche 1-17.
